# EUROPEAN PATENT APPLICATION

(11) **EP 3 633 214 A1**
(43) Date of publication of application: **08.04.2020**
(21) Application number: 19184386.1
(22) Date of filing: 04.07.2019
(51) Int. Cl.: F16B 15/06, F16B 13/00

(54) **FASTENER WITH TRANSITION ZONE AND METHOD OF USE**

(30) Priority: 05.10.2018 US 201816152844
(71) Applicant: SR Systems, LLC, Tuscaloosa AL 35406 (US)
(72) Inventor: ZIMMERMAN, Steve, Linden, AL Alabama 36748 (US); WALWORTH, Van T, Lebanon, TN Tennessee 37087 (US); DRUMMOND, Scott, Tuscaloosa, AL Alabama 35406 (US)
(74) Representative: Stuttard, Garry Philip

(57) **Abstract**

An improved fastener (20a) for securing a first building component to a second building component is provided. The fastener includes a head (22), a shank (26), and a tip (24). The shank is connected to the head and extends along a longitudinal axis to the tip. The shank includes an upper shank portion (32), a lower shank portion (36), and a transition zone (34a). The upper shank portion is located adjacent to the head. The lower shank portion is spaced from the upper shank portion and is located adjacent to the tip. The transition zone is positioned longitudinally between the upper shank portion and the lower shank portion. The transition zone is longitudinally spaced from the head by a pre-determined distance. The pre-determined distance is associated with a thickness of the first building component such that the transition zone is aligned with a joint between the first and second building components.

## Description

The subject disclosure generally relates to fasteners. By way of example and without limitation, such fasteners may be used in the construction industry for securing multiple building components to one another.

This section provides background information related to the present disclosure and is not necessarily prior art.

There are many types of fasteners for securing two or more pieces of wood or wood-like building components to one another. The construction industry has a variety of nail and screw fasteners designed for various specific applications. The wood or wood-like building components may be substrate plywood sheathing or decking material, board lumber, framing material, or any one of other similar construction components.

Many fasteners are very simple devices comprised of a simple head portion, a simple shank portion, and a standard pointed tip portion. Other fastening devices are more complex being comprised of a specialized head portion, intricate shank portion features, and/or variations of point portion tips. Many of the complex fastening devices have so many different sizes and lengths for a user to choose from, that it is difficult for the user to match the correct fastener option to the application, which results in substandard installations.

Examples of nail-like fasteners are disclosed in U.S. Patent No. 6,758,018 entitled "Power Driven Nails for Sheathing Having Enlarged Diameter Heads for Enhanced Retention and Method", which issued to Edward Sutt, Jr. on July 6, 2004; U.S. Patent No. 7,374,384 entitled "Fasteners for Securing Pallet Members Together", which issued to Edward Sutt, Jr. on May 20, 2008; U.S. Patent No. 7,395,925 entitled "Pallet Nail with Enlarged Head", which issued to Edward Sutt, Jr. on July 8, 2008; and U.S. Patent 8,794,893 entitled "Fastening Pin and Manufacturing Method Thereof", which issued to Yasunori Aihara, et al, on August 5, 2014. The shank portions of the nail-like fasteners disclosed in these references fail to include a deliberate delineation marking which portion of the shank is designed to be located at the joint between two construction components.

Examples of screw-like fasteners are disclosed in U.S. Patent No. 9,163,654 entitled "Screw for Composite/Plastic Materials", which issued to Peter Barenski, Jr., et al, on October 20, 2015 and U.S. Patent Application Publication No. 2007/0204552 entitled "Plastic Composite Deck Screw", which published on September 6, 2007 naming Daniel Onofrio as the sole inventor. The shank portions of the screw-like fasteners disclosed in these references also fail to include a deliberate delineation marking which portion of the shank is designed to be located at the joint between two construction components.

This section provides a general summary of the disclosure and is not a comprehensive disclosure of its full scope or all of its features.

In accordance with one aspect of the present disclosure, an improved fastener for securing a first building component to a second building component is provided. The fastener includes a head, a shank, and a tip. The head has a head diameter and the shank has a shank diameter that is less than the head diameter. The shank is connected to the head and extends along a longitudinal axis to the tip. The shank includes an upper shank portion, a lower shank portion, and a transition zone. The upper shank portion is located adjacent to the head. The lower shank portion is spaced from the upper shank portion and is located adjacent to the tip. The transition zone is positioned longitudinally between the upper shank portion and the lower shank portion. The transition zone is longitudinally spaced from the head by a pre-determined distance. The pre-determined distance is associated with a thickness of the first building component such that the transition zone is aligned with a joint between the first and second building components. Advantageously, the fastener of the present disclosure overcomes the short-comings of the known nail-like and screw-like fasteners discussed above.

In accordance with another aspect of the present disclosure, a method of selecting a fastener and a building component is provided. The method includes the steps of placing the fastener adjacent and transverse to the building component, aligning the head of the fastener with an upper surface of the building component, and determining whether the fastener is appropriate for use with the building component by visually identifying whether the transition zone provided on the shank of the fastener is aligned with a lower surface of the building component. In accordance with the method, the fastener is determined to be appropriate for use with the building component if the transition zone of the fastener is aligned with the lower surface of the building component. By contrast, the fastener is determined to be inappropriate for use with the building component if the transition zone of the fastener is above or below the lower surface of the building component.

Other advantages of the present invention will be readily appreciated, as the same becomes better understood by reference to the following detailed description when considered in connection with the accompanying drawings wherein:
Figure 1 is a side elevation view of a known nail-like fastener with a smooth shank;
Figure 2 is a side elevation view of a known nail-like fastener with multiple retention rings on the shank that increase in diameter moving toward the head of the nail-like fastener;
Figure 3 is a side elevation view of a known nail-like fastener with flute-like spirals on the shank;
Figure 4 is a side elevation view of a known nail-like fastener with helically extending spirals on the shank;
Figure 5 is a side perspective view of a known nail-like fastener with an upper shank portion that has flute-like spirals, a middle shank portion that is smooth, and a lower shank portion that has retention rings that increase in diameter moving toward the head of the nail-like fastener;
Figure 6 is a side elevation view of an exemplary fastener constructed in accordance with the subject disclosure that includes a transition zone on the shank;
Figure 7 is a side perspective view of the exemplary fastener shown in Figure 6;
Figure 8 is an enlarged side elevation view of the transition zone of the exemplary fastener shown in Figure 6;
Figure 9 is an enlarged side perspective view of the transition zone of the exemplary fastener shown in Figure 6;
Figure 10 is a side elevation view of the exemplary fastener illustrated in Figure 6 that is shown next to an exemplary building component where the transition zone of the exemplary fastener is aligned with a lower surface of the exemplary building component;
Figure 11 is a side elevation view of the exemplary fastener illustrated in Figure 6 that is shown next to an exemplary building component where the transition zone of the exemplary fastener is below the lower surface of the exemplary building component;
Figure 12 is a side elevation view of the exemplary fastener illustrated in Figure 6 that is shown next to an exemplary building component where the transition zone of the exemplary fastener is above the lower surface of the exemplary building component;
Figure 13 is a side elevation view of the exemplary fastener illustrated in Figure 6 that is shown embedded in two exemplary building components;
Figure 14 is a side elevation view of another exemplary fastener constructed in accordance with the subject disclosure that includes a transition zone on the shank with radially projecting longitudinal ribs;
Figure 15 is a side perspective view of the exemplary fastener shown in Figure 14;
Figure 16 is an enlarged side elevation view of the transition zone of the exemplary fastener shown in Figure 14;
Figure 17 is an enlarged side perspective view of the transition zone of the exemplary fastener shown in Figure 14;
Figure 18 is a side elevation view of the exemplary fastener illustrated in Figure 14 that is shown embedded in two exemplary building components;
Figure 19 is a side elevation view of another exemplary fastener constructed in accordance with the subject disclosure that includes an elongated transition zone on the shank;
Figure 20 is an enlarged side elevation view of the elongated transition zone of the exemplary fastener shown in Figure 19;
Figure 21 is a side elevation view of the exemplary fastener illustrated in Figure 19 that is shown next to an exemplary building component where the elongated transition zone of the exemplary fastener is aligned with a lower surface of the exemplary building component;
Figure 22 is another side elevation view of the exemplary fastener illustrated in Figure 19 that is shown next to an exemplary building component where the elongated transition zone of the exemplary fastener is aligned with a lower surface of the exemplary building component;
Figure 23 is another side elevation view of the exemplary fastener illustrated in Figure 19 that is shown next to an exemplary building component where the elongated transition zone of the exemplary fastener is aligned with a lower surface of the exemplary building component;
Figure 24 is a side elevation view of another exemplary fastener constructed in accordance with the subject disclosure that includes a bulbous transition zone on the shank;
Figure 25 is an enlarged side elevation view of the bulbous transition zone of the exemplary fastener shown in Figure 24;
Figure 26 is a front elevation view of another exemplary fastener constructed in accordance with the subject disclosure that includes a shank with an anti-rotation portion having two faces;
Figure 27 is a side elevation view of the exemplary fastener shown in Figure 26;
Figure 28 is a side perspective view of another exemplary fastener constructed in accordance with the subject disclosure that includes a shank with an anti-rotation portion having four faces;
Figure 29 is a front elevation view of another exemplary fastener constructed in accordance with the subject disclosure that includes a shank with an anti-rotation portion having two faces and two ears;
Figure 30 is a side elevation view of the exemplary fastener shown in Figure 29;
Figure 31 is a top perspective view of the exemplary fastener shown in Figure 29;
Figure 32 is a bottom perspective view of the exemplary fastener shown in Figure 29;
Figure 33 is a front elevation view of another exemplary fastener constructed in accordance with the subject disclosure that includes a shank with an anti-rotation portion and an upper shank portion that is threaded;
Figure 34 is a side elevation view of the exemplary fastener shown in Figure 33;
Figure 35 is a top perspective view of the exemplary fastener shown in Figure 33;
Figure 36 is a bottom perspective view of the exemplary fastener shown in Figure 33;
Figure 37 is a front elevation view of another exemplary fastener constructed in accordance with the subject disclosure that includes a shank with an anti-rotation portion and a transition zone;
Figure 38 is a side elevation view of the exemplary fastener shown in Figure 37;
Figure 39 is a side perspective view of the exemplary fastener shown in Figure 37;
Figure 40 is a side elevation view of another exemplary fastener constructed in accordance with the subject disclosure that includes a shank with relief cuts;
Figure 41 is a side elevation view of the exemplary fastener shown in Figure 40 where the shank has become bent as a result of being driven into one or more building components;
Figure 42 is a side elevation view of the exemplary fastener illustrated in Figure 40 that is shown embedded in two exemplary building components;
Figure 43 is a side cross-sectional view of another exemplary fastener constructed in accordance with the subject disclosure that includes a shank with relief cuts and a plurality of retention rings;
Figure 44 is a side elevation view of another exemplary fastener constructed in accordance with the subject disclosure that includes a shank with a helical bend;
Figure 45 is a side elevation view of another exemplary fastener constructed in accordance with the subject disclosure that includes a bridge portion and two shanks with helical bends;
Figure 46 is a partial side perspective view of an exemplary tip and lower shank portion of a fastener that is constructed in accordance with the subject disclosure where the tip includes four beveled blades of varying lengths;
Figure 47 is an enlarged side perspective view of the exemplary tip of the fastener shown in figure 46;
Figure 48 is a bottom elevation view of the exemplary tip of the fastener shown in figure 46;
Figure 49 is a side perspective view of another exemplary fastener constructed in accordance with the subject disclosure where the tip includes four blades having a cross-like cross-section; and
Figure 50 is a bottom cross-sectional view of the tip of the exemplary fastener shown in Figure 49.

Referring to the Figures, wherein like numerals indicate corresponding parts throughout the several views, several fasteners **20a-20m** constructed in accordance with the subject invention are illustrated.

Example embodiments will now be described more fully with reference to the accompanying drawings. Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

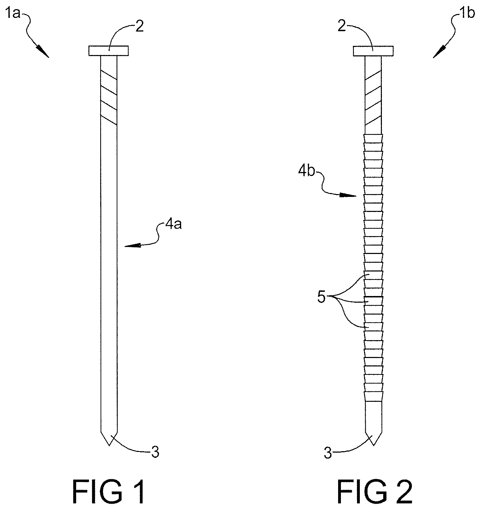

Referring to Figures 1-5, several known nail-like fasteners **la-e** are illustrated. Each of these nail-like fasteners **la-e** extends longitudinally between a head **2** and a tip **3**. Each of the nail-like fasteners **1a-e** also includes a shank **4a-e** disposed between the head **2** and the tip **3**. It should generally be appreciated that the head **2** of each of the nail-like fasteners **1a-e** illustrated in Figures 1-5 is larger in diameter than the shank **4a-e** of the nail-like fasteners **1a-e** and the tip **3** of each of the nail-like fasteners **la-e** is generally pointed. The shank **4a** of the nail-like fastener **1a** shown in Figure 1 is smooth and has a cylindrical shape. As such, the nail-like fastener **1a** shown in Figure 1 has the configuration of a traditional nail. The shank **4b** of the nail-like fastener **1b** shown in Figure 2 generally has a cylindrical shape and includes multiple retention rings **5**. The multiple retention rings **5** extend along only a portion of the shank **4b** with the shank **4b** being smooth adjacent to the head **2** and the tip **3**. Each of the multiple retention rings **5** is frusto-conical in shape and increase in diameter moving toward the head **2** of the nail-like fastener **1b**.

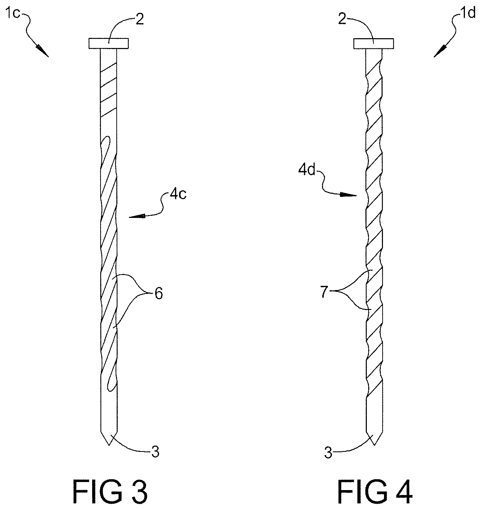

The shank **4c** of the nail-like fastener **1c** shown in Figure 3 generally has a cylindrical shape and includes flute-like spirals **6.** The flute-like spirals **6** may be cut into the shank **4c** and extend along only a portion of the shank **4c** with the shank **4c** being smooth adjacent to the head **2** and the tip **3**. The shank **4d** of the nail-like fastener **1d** shown in Figure 4 generally has a cylindrical shape and includes helically extending spirals **7**. The helically extending spirals **7** may be cut into the shank **4d** and extend in a helical fashion along only a portion of the shank **4d** with the shank **4d** being smooth adjacent to the head **2** and the tip **3.** In this way, the helically extending spirals **7** of the nail-like fastener **1d** may resemble the shape of a drill bit.

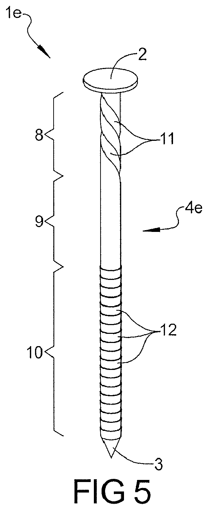

The shank **4e** of the nail-like fastener 1**e** shown in Figure 5 is generally cylindrical and includes an upper shank portion **8**, a middle shank portion **9**, and a lower shank portion **10**. The upper shank portion **8** is disposed adjacent to the head **2** of the nail-like fastener **1e** and the lower shank portion **10** is disposed adjacent to the tip **3** of the nail-like fastener **1e.** The upper and lower shank portions **8, 10** are spaced from one another by the middle shank portion **9**, which is disposed between the upper shank portion **8** and the lower shank portion **10**. The upper shank portion **8** of the nail-like fastener **1e** shown in Figure 5 is provided with flute-like spirals **11** that are similar to those found on the shank **4c** of the nail-like fastener **1c** shown in Figure 3. The middle shank portion **9** of the nail-like fastener **1e** shown in Figure 5 is smooth like the shank **4a** of the nail-like fastener **1a** shown in Figure 1. The lower shank portion **10** of the nail-like fastener **1e** shown in Figure 5 is provided with multiple retention rings **12** that are similar to those found on the shank **4b** of the nail-like fastener **1b** shown in Figure 2. As such, the multiple retention rings **12** on the lower shank portion **10** increase in diameter moving toward the head **2** of the nail-like fastener **1e** shown in Figure 5.

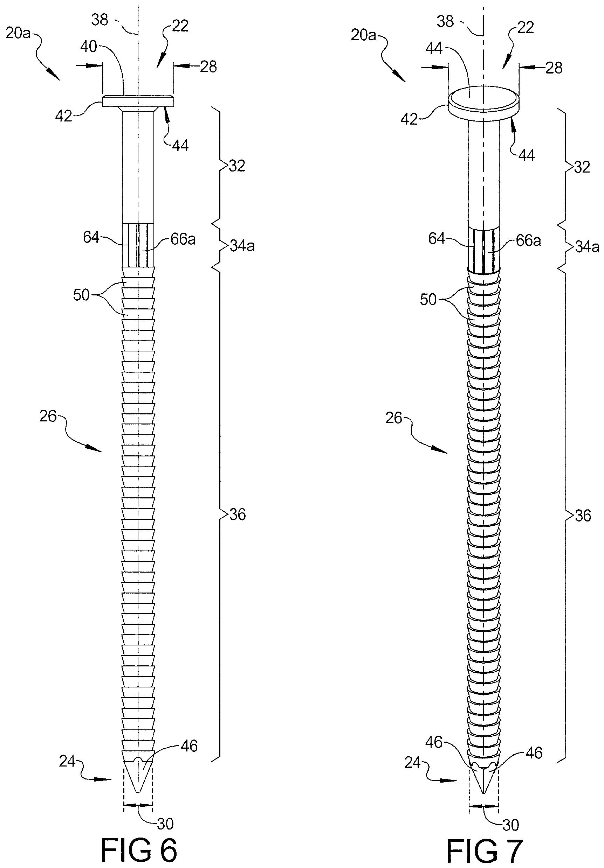

With reference to Figures 6-13, a fastener **20a** constructed in accordance with the present disclosure is illustrated. The fastener **20a** extends longitudinally between a head **22** and a tip **24.** The fasteners **20a** also includes a shank **26** disposed between the head **22** and the tip **24.** As best seen in Figures 6 and 7, the head **22** of the fastener **20a** has a head diameter **28** and the shank **26** of the fastener **20a** has a shank diameter **30** that is smaller than the head diameter **28.** The tip **24** of the fastener **20a** tapers from the shank diameter **30** to a point (i.e. the tip **24** of the fastener **20a** is pointed). The shank **26** of the fastener **20a** shown in Figures 6-13 is generally cylindrical in shape and includes an upper shank portion **32**, a transition zone **34a**, and a lower shank portion **36**. The upper shank portion **32** is disposed adjacent to the head **22** of the fastener **20a** and the lower shank portion **36** is disposed adjacent to the tip **24** of the fastener **20a**. The upper and lower shank portions **32, 36** are spaced from one another by the transition zone **34a** of the shank **26**, which is disposed between the upper shank portion **32** and the lower shank portion **36.** Accordingly, the upper shank portion **32** extends longitudinally from the head **22** to the transition zone **34a,** the transition zone **34a** extends longitudinally from the upper shank portion **32** to the lower shank portion **36,** and the lower shank portion **36** extends longitudinally from the transition zone **34a** to the tip **24**. As shown in Figures 6 and 7, the head **22**, the tip **24**, the upper shank portion **32**, the transition zone **34a** of the shank **26**, and the lower shank portion **36** are all aligned with one another and are arranged co-axially and sequentially along a longitudinal axis **38** of the fastener **20a**.

It should be appreciated that the head **22** and the tip **24** of the fastener **20a** may be provided in a variety of different configurations without departing from the scope of the present disclosure. The head **22** of the fastener **20a** illustrated in Figures 6 and 7 has an upper face **40** that is slightly domed adjacent a perimeter **42** of the head **22** and that is flat (i.e. transverse to the longitudinal axis **38**) at the center of the head **22**. The head **22** also includes a bottom face **44** that is flat (i.e. transverse to the longitudinal axis **38**). Notwithstanding this exemplary arrangement, other configurations for the head **22** are possible. By way of non-limiting example, the upper face **40** of the head **22** may be completely flat and the bottom face **44** of the head **22** may have a frusto-conical shape and/or include a concave under-cut (not shown). The tip **24** of the fastener **20a** illustrated in Figures 6 and 7 includes three convergent faces **46** that are angled relative to the longitudinal axis **38** to give the tip **24** a pointed shape. Notwithstanding this exemplary arrangement, other configurations for the tip **24** are possible. By way of non-limiting example, the tip **24** may include any number of multiple convergent faces or a single face that is angled relative to the longitudinal axis **38**. In another non-limiting example, the tip **24** may have a conical shape.

As best seen in Figures 6-9, the upper shank portion **32** of the fastener **20a** has a smooth cylindrical shape and the lower shank portion **36** of the fastener **20a** has a plurality of lower retention rings **50**. Each retention ring **50** in the plurality of lower retention rings **50** on the lower shank portion **36** increase in diameter moving toward the head **22** of the fastener **20a**. In other words, each of the retention rings **50** in the plurality of lower retention rings **50** increase in diameter moving toward the transition zone **34a** of the shank **26**. Each of the retention rings **50** in the plurality of lower retention rings **50** extends radially around at least part of the shank **26**, meaning that the retention rings **50** may or may not extend a full 360 degrees about the shank **26**.

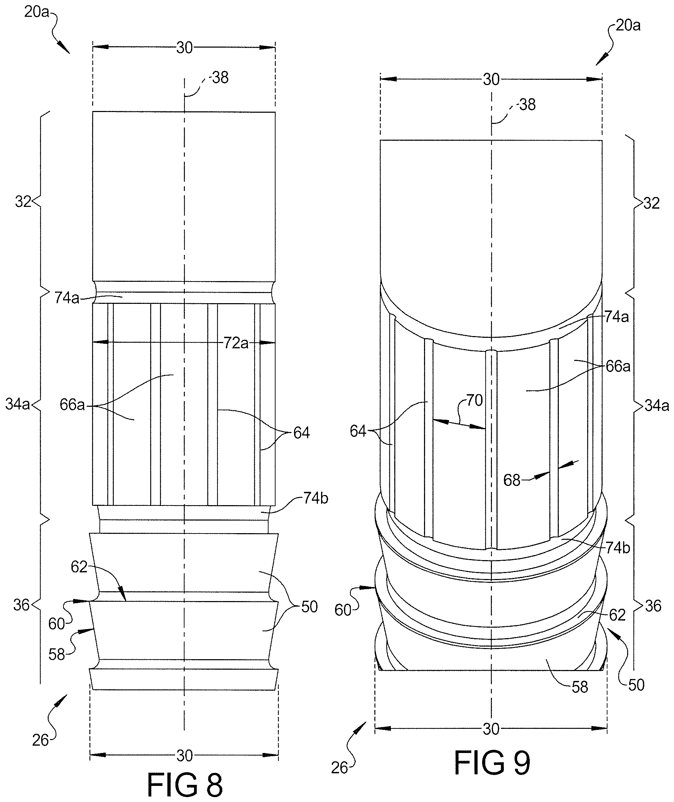

As best seen in Figures 8 and 9, each retention ring **50** in the plurality of lower retention rings **50** on the lower shank portion **36** includes a ramped face **58**, an outer edge **60,** and a barb face **62**. The ramped face **58** has a frusto-conical shape and is angled relative to longitudinal axis **38** such that each retention ring **50** in the plurality of lower retention rings **50** increases in diameter moving towards the transition zone **34a** (i.e. moving towards the head **22** of the fastener **20a**). The barb face **62** extends annularly about the shank **26** and may be abruptly curved, undercut, or flat and transverse to the longitudinal axis **38** of the fastener **20a**. The ramped face **58** and the barb face **62** of each retention ring **50** in the plurality of lower retention rings **50** extend (i.e. project) from the lower shank portion **36** and meet (i.e. converge) at the outer edge **60**. The outer edge **60** may be sharp or rounded. The shank diameter **30** at the lower shank portion **36** of the fastener **20a** is measured across the outer edge **60** of one of the retention rings **50** in the plurality of lower retention rings **50**. The shank diameter **30** at the upper and lower shank portions **32, 36** of the fastener **20a** may be the same or may be different. In the example illustrated in Figures 6-13, the shank diameter **30** is the same at both the upper and lower shank portions **32, 36** of the fastener **20a**.

The transition zone **34a** of the fastener **20a** may have a variety of different arrangements. In Figures 6-13, the transition zone **34a** includes multiple longitudinal grooves **64** that define multiple longitudinal ribs **66a**. The multiple longitudinal grooves **64** run parallel to the longitudinal axis **38** of the fastener **20a** and extend radially into the shank **26** in the transition zone **34a**. The multiple longitudinal ribs **66a** also run parallel to the longitudinal axis **38** of the fastener **20a** and are disposed between the multiple longitudinal grooves **64**. The multiple longitudinal grooves **64** and thus the multiple longitudinal ribs **66a** are circumferentially spaced about the transition zone **34a** of the shank **26** in a sequentially indexed arrangement. As best seen in Figure 9, each of the multiple longitudinal grooves **64** has a groove width **68** and each of the multiple longitudinal ribs **66a** has a rib width **70**. As such, the multiple longitudinal grooves **64** are spaced from one another by the rib width **70** and the multiple longitudinal ribs **66a** are spaced from one another by the groove width **68**. Although other arrangements are possible, in the illustrated example, the groove width **68** is smaller than the rib width **70**. Advantageously, the multiple longitudinal ribs **66a** increase the lateral shear strength of the transition zone **34a** of the shank **26**.

The transition zone **34a** of the fastener **20a** has a transition zone diameter **72a**. In accordance with the arrangement illustrated in Figures 6-13, the multiple longitudinal ribs **66a** do not extend radially beyond the retention rings **50** in the plurality of lower retention rings **50.** In other words, the multiple longitudinal ribs **66a** are radially inset relative to the outer edges **60** of the retention rings **50** in the plurality of lower retention rings **50**. Accordingly, the transition zone diameter **72a** is less than or equal to the shank diameter **30** of the upper and lower shank portions **32, 36** of the shank **26**. Optionally, the transition zone **34a** may further include one or more annular grooves **74a, 74b**. The annular grooves **74a, 74b** circumscribe the shank **26** and extend radially into the shank **26** in the transition zone **34a**. Annular groove **74a** separates the multiple longitudinal ribs **66a** of the transition zone **34a** from the upper shank portion **32** and annular groove **74b** separates the multiple longitudinal ribs **66a** of the transition zone **34a** from the plurality of lower retention rings **50** on the lower shank portion **36**. The multiple longitudinal grooves **64** may or may not be opened to the annular grooves **74a, 74b**.

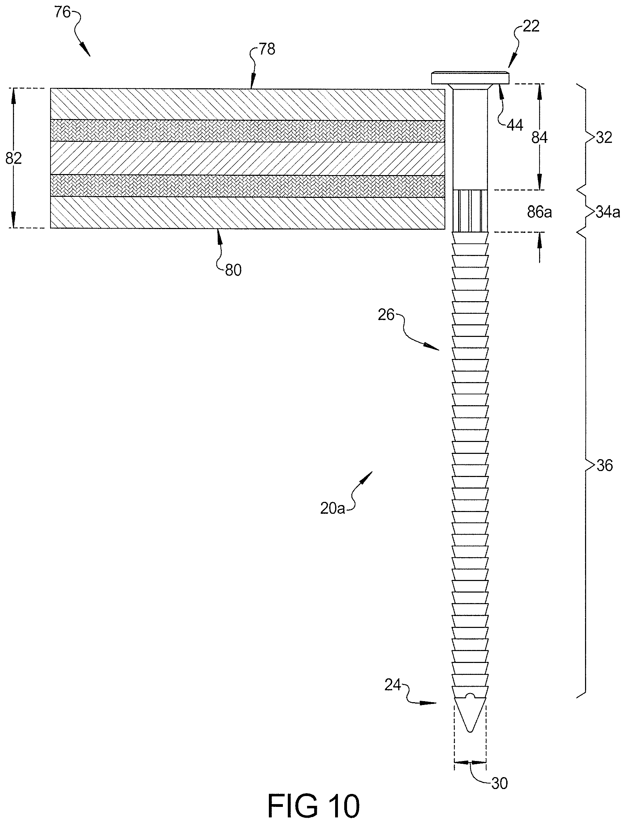

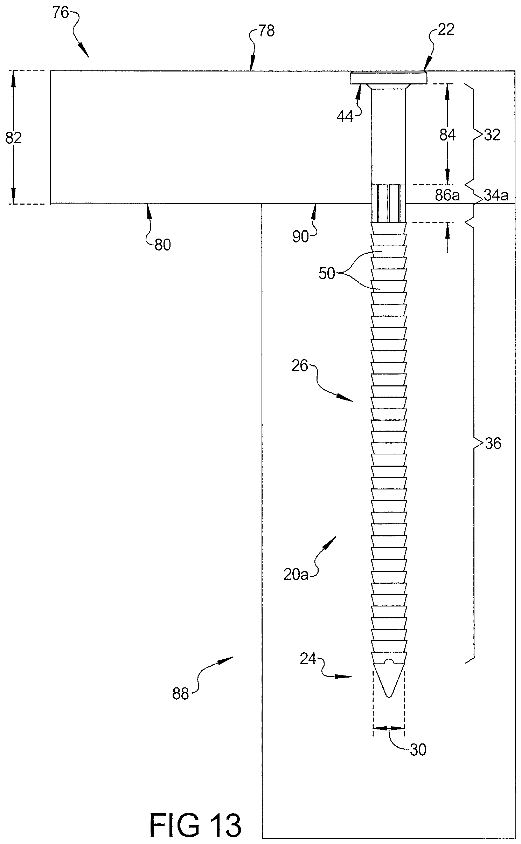

With reference to Figures 10-13, the fastener **20a** is shown in combination with a first building component **76**. The first building component **76** may be made from a variety of different materials including solid wood, fiber boards, composites, laminates, plastics, metal, and other substrate materials. For example and without limitation, the first building component **76** may be a piece of plywood or lumber. The first building component **76** has an upper surface **78**, a lower surface **80** that is spaced from the upper surface **78**, and a thickness **82** that is measured between the upper and lower surfaces **78, 80**. As shown in Figure 13, the fastener **20a** is designed to be driven into the first building component **76** to a position where the head **22** impacts the upper surface **78** of the first building component **76** and the tip **24** protrudes from the lower surface **80** of the first building component **76**. The transition zone **34a** on the shank **26** of the fastener **20a** is spaced from the head **22** by a pre-determined distance **84** that is associated with the thickness **82** of the first building component **76**. The pre-determined distance **84** is selected to align the transition zone **34a** of the fastener **20a** with the lower surface **80** of the first building component **76** when the head **22** of the fastener **20a** is aligned with the upper surface **78** of the first building component **76**. The transition zone **34a** of the fastener **20a** also has a pre-determined length **86a**. In the illustrated example, the pre-determined length **86a** of the transition zone **34a** may equal one to two times the shank diameter **30**, but other configurations are possible. The pre-determined length **86a** is also selected to align the transition zone **34a** of the fastener **20a** with the lower surface **80** of the first building component **76** when the head **22** of the fastener **20a** is aligned with the upper surface **78** of the first building component **76**. As such, the fastener **20a** may be provided in various configurations that are specially adapted for use with first building components **76** of different thicknesses **82**.

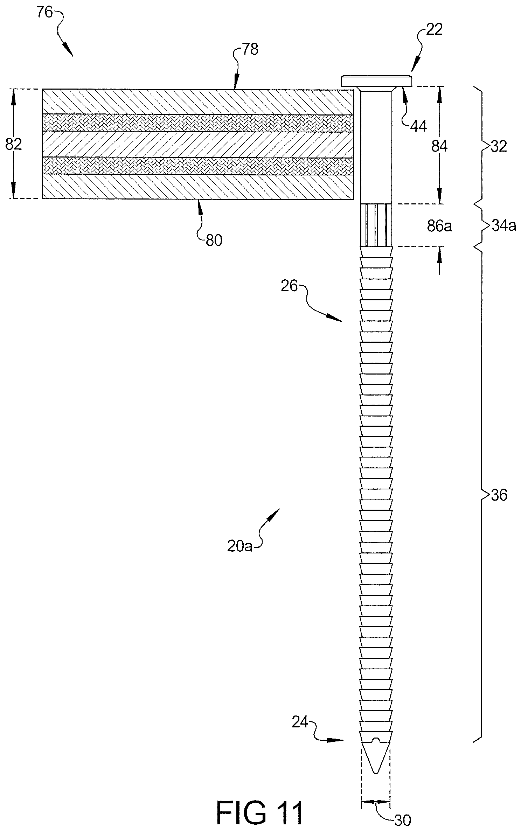

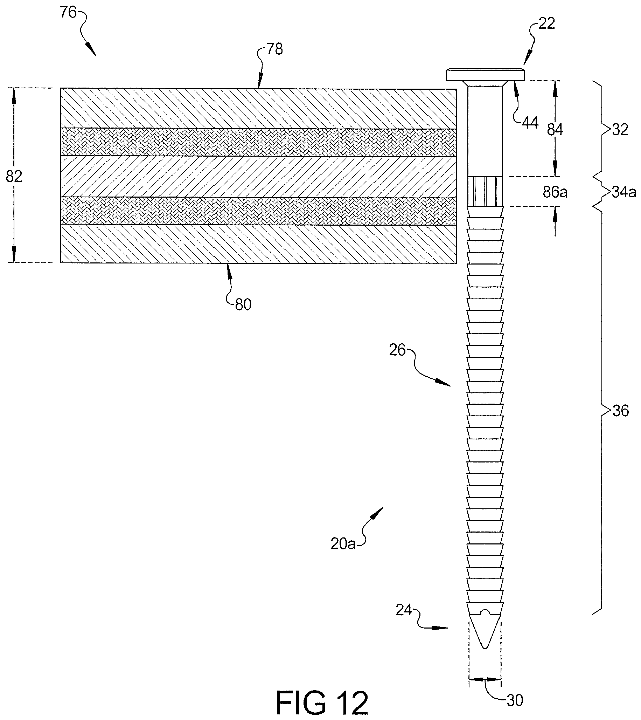

The location of the transition zone **34a** along the skank **26** (i.e. the length of pre-determined distance **84** and the pre-determined length **86a**) may be used to visually confirm whether the fastener **20a** being used is appropriate for any given thickness **82** of the first building component **76**. This task may be accomplished by performing the following method steps. First, the fastener **20a** is placed adjacent and transverse to the first building component **76**. Second, the bottom face **44** of the head **22** of the fastener **20a** is aligned with the upper surface **78** of the first building component **76**. Third, visual inspection is used to determine whether the fastener **20a** is appropriate for the thickness **82** of the first building component **76**. If the transition zone **34a** of the fastener **20a** is aligned with the lower surface **80** of the first building component **76** (i.e. if the lower surface **80** intersects with the transition zone **34a**, as illustrated in Figure 10), then the fastener **20a** is appropriate for the thickness **82** of the first building component **76**. If the transition zone **34a** of the fastener **20a** is entirely below the lower surface **80** of the first building component **76** (i.e. if all of the transition zone **34a** extends past the lower surface **80**, as illustrated in Figure 11), then the fastener **20a** is not appropriate for the thickness **82** of the first building component **76**. Finally, if the transition zone **34a** of the fastener **20a** is entirely above the lower surface **80** of the first building component **76** (i.e. if all of the transition zone **34a** is disposed between the upper and lower surfaces **78, 80**, as illustrated in Figure 12), then the fastener **20a** is not appropriate for the thickness **82** of the first building component **76**.

Figure 13 illustrates the fastener **20a** after the fastener **20a** has been driven into the first and second building components **76, 88**. It should be appreciated that the fastener **20a** may be driven into the first and second building components **76, 88** in a number of different ways. For example and without limitation, where the fastener **20a** has a nail-like configuration, the fastener **20a** may be driven into the first and second building components **76, 88** manually using a hammer or with a nail gun. As shown in Figure 13, the first and second building components **76, 88** are joined together by the fastener **20a** at a joint **90** where the lower surface **80** of the first building component **76** abuts the second building component **88**. It should be appreciated that when the fastener **20a** is appropriately selected for the thickness **82** of the first building component **76** (as shown in Figure 13), the joint **90** is aligned with (i.e. intersects) the transition zone **34a** of the fastener **20a**. In other words, the transition zone **34a** of the fastener **20a** is arranged so as to straddle the joint **90** between the first and second building components **76, 88**. As a result of this alignment, all of the retention rings **50** in the plurality of lower retention rings **50** on the lower shank portion **36** of the fastener **20a** resist separation of the first and second building components **76, 88**. This improves the holding force and pull-though performance of the fastener **20a**.

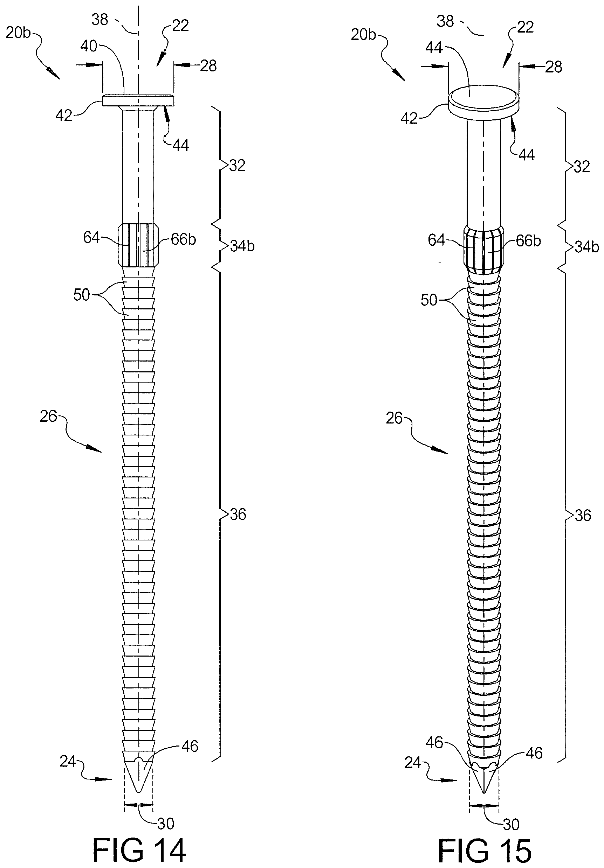

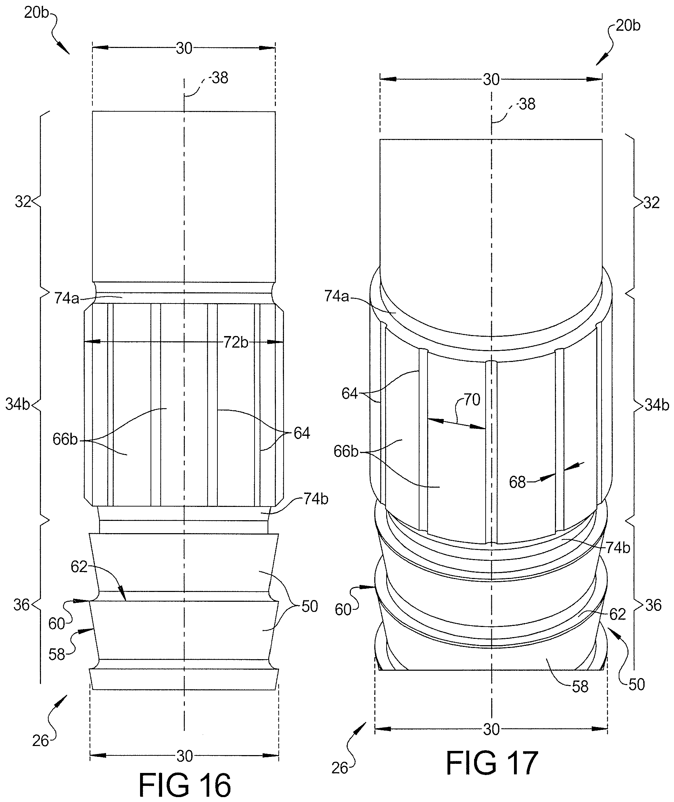

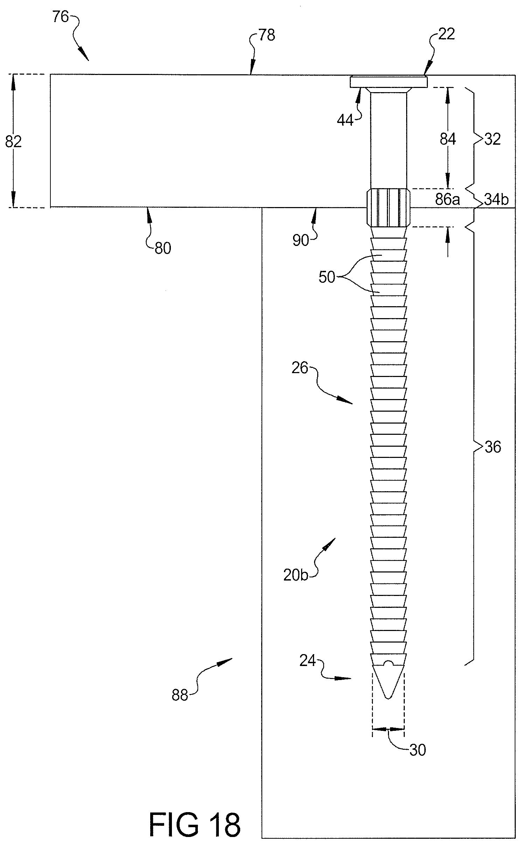

Another fastener **20b** constructed in accordance with the present disclosure is illustrated in Figures 14-18. The fastener **20b** illustrated in Figures 14-18 is identical to the fastener **20a** illustrated in Figures 6-13 except that the fastener **20b** shown in Figures 14-18 has a transition zone **34b** with modified longitudinal ribs **66b**. The multiple longitudinal ribs **66b** run parallel to the longitudinal axis **38** of the fastener **20a** and are disposed between the multiple longitudinal grooves **64**. The multiple longitudinal grooves **64** and thus the multiple longitudinal ribs **66b** are circumferentially spaced about the transition zone **34b** of the shank **26** in a sequentially indexed arrangement where the multiple longitudinal grooves **64** are spaced from one another by the rib width **70** and the multiple longitudinal ribs **66b** are spaced from one another by the groove width **68**. Where fastener **20b** differs from fastener **20a** is that the multiple longitudinal ribs **66b** extend radially beyond the retention rings **50** in the plurality of lower retention rings **50.** In other words, the multiple longitudinal ribs **66b** project radially beyond the outer edges **60** of the retention rings **50** in the plurality of lower retention rings **50**. Accordingly, the fastener **20b** shown in Figures 14-18 has a transition zone diameter **72b** measured across the multiple longitudinal ribs **66b** that is larger than the shank diameter **30** of the upper and lower shank portions **32, 36** of the shank **26**. Advantageously, this arrangement of the multiple longitudinal ribs **66b** increases the lateral shear strength of the transition zone **34b** of the shank **26**. In addition, because the multiple longitudinal ribs **66b** project radially beyond the outer edges **60** of the retention rings **50** in the plurality of lower retention rings **50**, the multiple longitudinal ribs **66b** dig into the first and/or second building components **76, 88** and resist rotation of the fastener **20b** relative to the first and/or second building components **76, 88**.

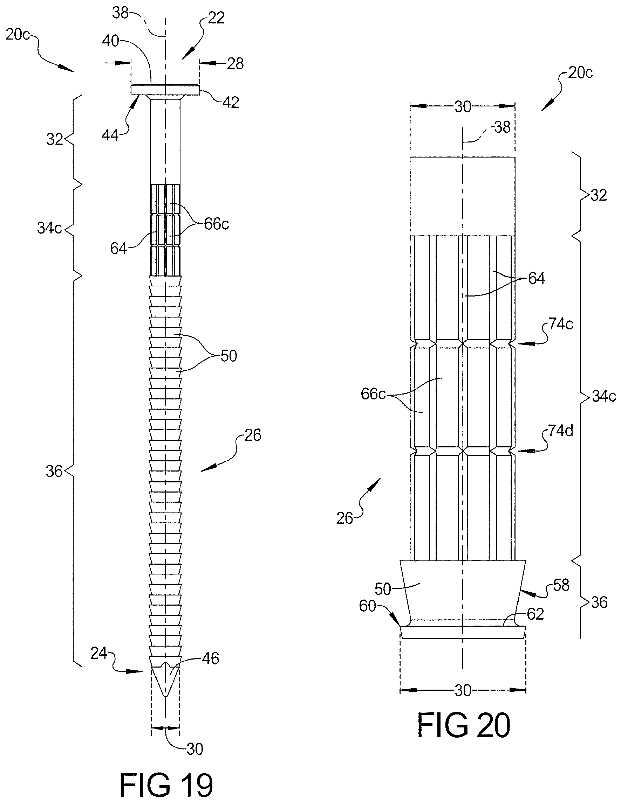

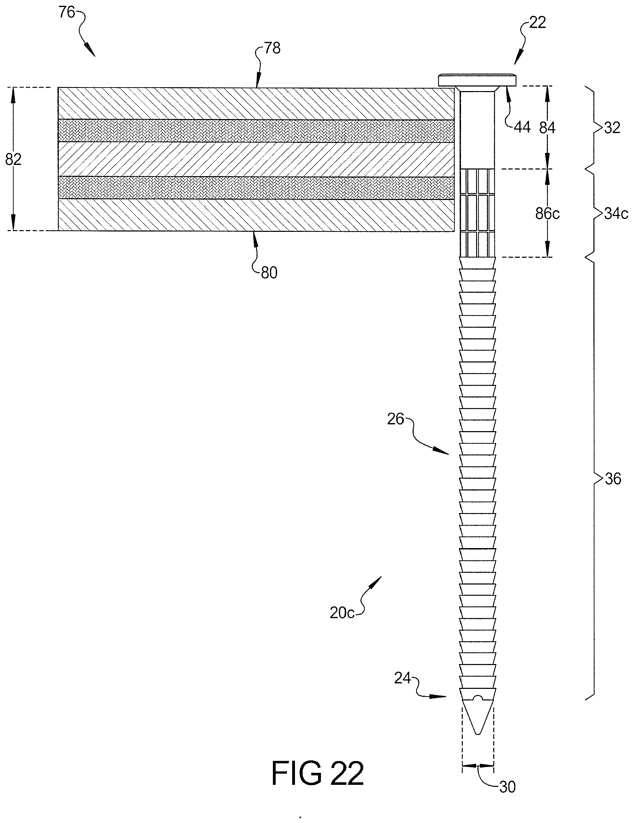

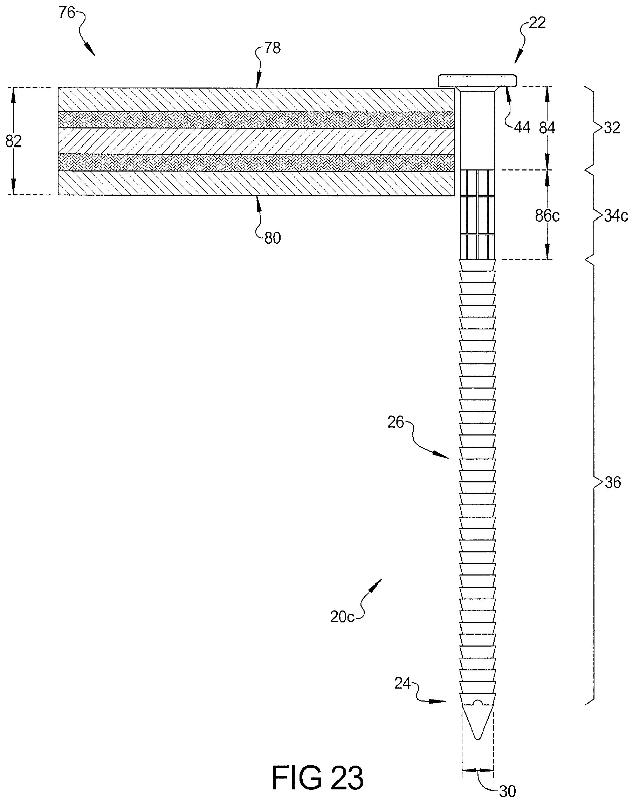

Another fastener **20c** constructed in accordance with the present disclosure is illustrated in Figures 19-23. The fastener **20c** illustrated in Figures 19-23 is identical to the fastener **20a** illustrated in Figures 6-13 except that the fastener **20c** shown in Figures 19-23 has a transition zone **34c** that is elongated. The transition zone **34c** of the fastener **20c** shown in Figures 19-23 has a pre-determined length **86c** that is longer than the pre-determined length **86a** of the transition zone **34a** of the fastener **20a** shown in Figures 6-13. Unlike the transition zone **34a** of fastener **20a**, the fastener **20c** shown in Figures 19-23 does not have annular grooves **74a, 74b** separating the multiple longitudinal ribs **66c** from the upper shank portion **32** and the second plurality of retention rings **50** on the lower shank portion **36**. Instead, the transition zone **34c** has one or more annular grooves **74c, 74d** that are spaced from one another and from the upper and lower shank portions **32, 36**. As such, the transition zone **34c** has multiple longitudinal ribs **66c** that are segmented where the annular grooves **74c, 74d** cross the multiple longitudinal ribs **66c**. The multiple longitudinal grooves **64** extending between the multiple longitudinal ribs **66c** may or may not be opened to the annular grooves **74c, 74d**.

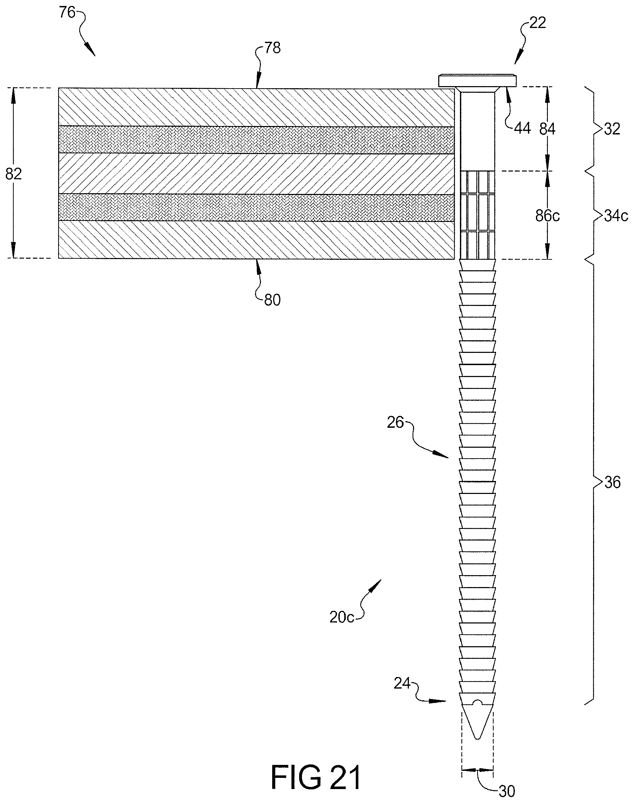

With reference to Figures 21-23, the fastener **20c** is shown in combination with the first building component **76**. Again, the first building component **76** may be made from a variety of different materials including wood, plastics, metal, and other substrate materials. For example and without limitation, the first building component **76** may be a piece of plywood, lumber, or a wood-like building material. The transition zone **34c** on the shank **26** of the fastener **20c** is spaced from the head **22** by the pre-determined distance **84** associated with the thickness **82** of the first building component **76**. The pre-determined distance **84** is selected to align the transition zone **34c** of the fastener **20c** with the lower surface **80** of the first building component **76** when the head **22** of the fastener **20c** is aligned with the upper surface **78** of the first building component **76**. The transition zone **34c** of the fastener **20c** also has a pre-determined length **86c**. The pre-determined length **86c** of the transition zone **34c** of the fastener **20c** shown in Figures 19-23 is longer than the pre-determined length **86a** of the transition zone **34a** of the fastener **20a** shown in Figures 6-13. The pre-determined length **86c** of transition zone **34c** is selected to encompass a wider range of thicknesses **82** of the first building component **76**. As shown in Figures 21-23, the lower surface **80** of the first building component **76** remains aligned with the transition zone **34c** even when the fastener **20c** is used with first building components **76** of different thicknesses **82**. As such, Figures 21-23 all illustrate appropriate uses of fastener **20c**. The annular grooves **74c, 74d** of the transition zone **34c** may be associated with first building components **76** of different thicknesses **82** and can be useful in demarcating the transition zone **34c**.

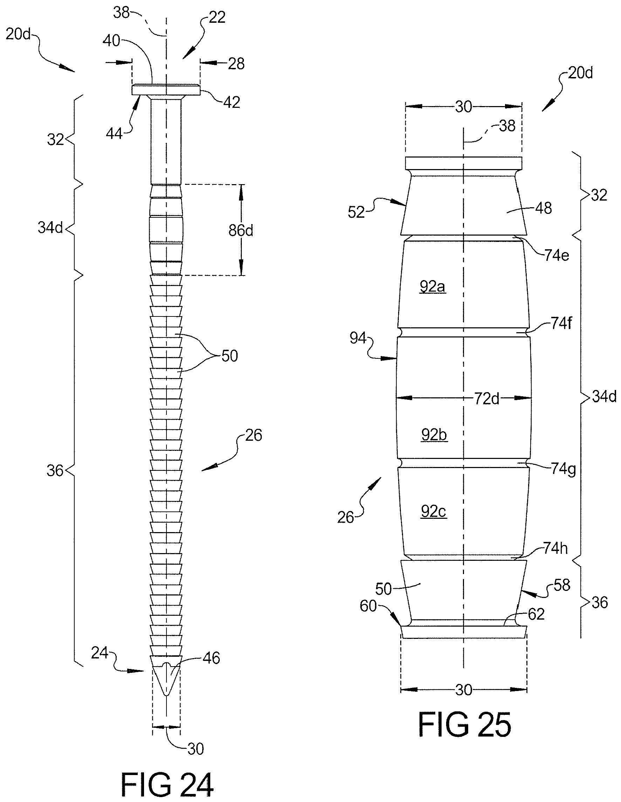

Another fastener **20d** constructed in accordance with the present disclosure is illustrated in Figures 24 and 25. The fastener **20d** illustrated in Figures 24 and 25 is identical to the fastener **20a** illustrated in Figures 6-13 except that the fastener **20d** shown in Figures 24 and 25 has a transition zone **34d** that is elongated and has a bulbous (i.e. outwardly bulging) shape. The transition zone **34d** of the fastener **20d** shown in Figures 24 and 25 has a pre-determined length **86d** that is longer than the pre-determined length **86a** of the transition zone **34a** of the fastener **20a** shown in Figures 6-13. Unlike the transition zone **34a** of fastener **20a**, the transition zone **34d** of the fastener **20d** shown in Figures 24 and 25 does not have multiple longitudinal grooves **64** or multiple longitudinal ribs **66a**. Instead, the transition zone **34d** has multiple annular grooves **74e-74h** that are spaced from one another and that separate the transition zone **34d** into multiple segments **92a-92c.** Segment **92a** is disposed adjacent the upper shank portion **32,** segment **92c** is disposed adjacent the lower shank portion **36,** and segment **92b** is disposed between segments **92a** and **92c** of the transition zone **34d**. The multiple annular grooves **74e-74h** circumscribe the shank **26** and extend radially into the shank **26** in the transition zone **34d**. Annular groove **74e** separates segment **92a** of the transition zone **34d** from the upper shank portion **32** and annular groove **74h** separates segment **92c** of the transition zone **34d** from the plurality of lower retention rings **50** on the lower shank portion **36**. Annular groove **74f** separates segment **92a** and segment **92b** of the transition zone **34d** from one another and annular groove **74g** separates segment **92b** and segment **92c** of the transition zone **34d** from one another. Segments **92a-92c** give the transition zone **34d** a convex outer surface **94**. The convex outer surface **94** of the transition zone **34d** extends radially beyond the retention rings **50** in the plurality of lower retention rings **50**. In other words, the convex outer surface **94** of the transition zone **34d** projects radially beyond the outer edges **60** of the retention rings **50** in the plurality of lower retention rings **50.** Accordingly, the fastener **20d** shown in Figures 24 and 25 has a transition zone diameter **72d** measured across segment **92b** of the transition zone **34d** that is larger than the shank diameter **30** of the upper and lower shank portions **32, 36** of the shank **26**. Advantageously, this arrangement increases the lateral shear strength of the transition zone **34d** of the shank **26**.

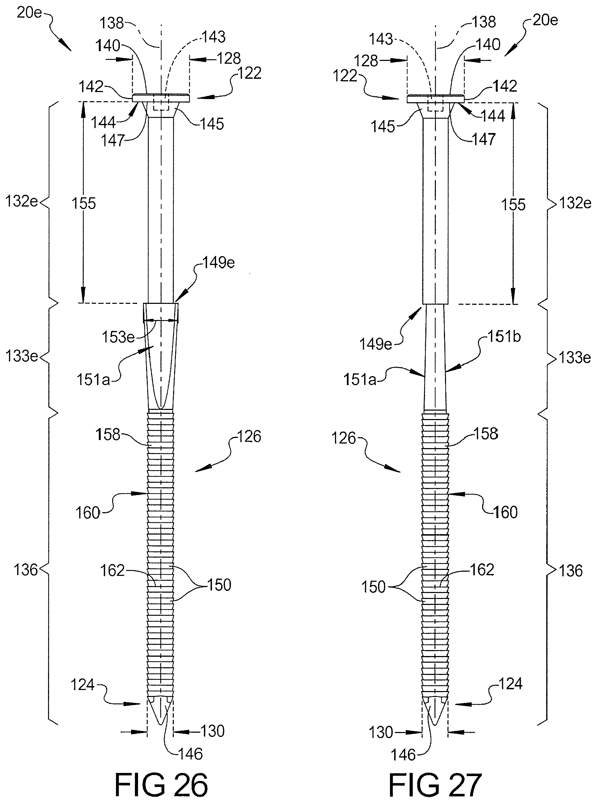

Another fastener **20e** constructed in accordance with the present disclosure is illustrated in Figures 26 and 27. The fastener **20e** extends longitudinally between a head **122** and a tip **124**. The fastener **20e** also includes a shank **126** disposed between the head **122** and the tip **124**. The head **122** of the fastener **20e** has a head diameter **128** and the shank **126** of the fastener **20e** has a shank diameter **130** that is smaller than the head diameter **128**. The tip **124** of the fastener **20e** tapers from the shank diameter **130** to a point (i.e. the tip **124** of the fastener **20e** is pointed). The shank **126** of the fastener **20e** includes an upper shank portion **132e** and a lower shank portion **136** that are generally cylindrical in shape. The upper shank portion **132e** is disposed adjacent to the head **122** of the fastener **20e** and the lower shank portion **136** is disposed adjacent to the tip **124** of the fastener **20e**. The upper and lower shank portions **132e, 136** are spaced from one another by an anti-rotation portion **133e** of the shank **126** that has a non-circular cross-section. The anti-rotation portion **133e** of the shank **126** is disposed between the upper shank portion **132e** and the lower shank portion **136.** Accordingly, the upper shank portion **132e** extends longitudinally from the head **122** to the anti-rotation portion **133e** of the shank **26**, the anti-rotation portion **133e** of the shank **126** extends longitudinally from the upper shank portion **132e** to the lower shank portion **136**, and the lower shank portion **136** extends longitudinally from the anti-rotation portion **133e** of the shank **126** to the tip **124**. As shown in Figures 26 and 27, the head **122**, the tip **124**, the upper shank portion **132e**, the anti-rotation portion **133e** of the shank **126**, and the lower shank portion **136** are all aligned with one another and are arranged co-axially and sequentially along a longitudinal axis **138** of the fastener **20e**.

It should be appreciated that the head **122** and the tip **124** of the fastener **20e** may be provided in a variety of different configurations without departing from the scope of the present disclosure. The head **122** of the fastener **20a** illustrated in Figures 26 and 27 has an upper face **140** that is slightly domed adjacent a perimeter **142** of the head **122** and that is flat (i.e. transverse to the longitudinal axis **138**) at the center of the head **122**. The head **122** may be provided with a tool interface **143**. The tool interface **143** is configured to mate with a tool, including without limitation, a Phillips head screw driver, a flat head screw driver, a hex head driver, or a torx head driver. The head **122** also includes a bottom face **144** that has a frusto-conical base **145** and a concave under-cut **147** that extends longitudinally into the head **122** and annularly between the frusto-conical base **145** and the perimeter **142** of the head **122**. Notwithstanding this exemplary arrangement, other configurations for the head **122** are possible. The tip **124** of the fastener **20e** illustrated in Figures 26 and 27 includes three convergent faces **146** that are angled relative to the longitudinal axis **138** to give the tip **124** a pointed shape. Notwithstanding this exemplary arrangement, other configurations for the tip **124** are possible. By way of non-limiting example, the tip **124** may include any number of multiple convergent faces or a single face that is angled relative to the longitudinal axis **138**. In another non-limiting example, the tip **124** may have a conical shape.

The upper shank portion **132e** of the fastener **20e** illustrated in Figures 26 and 27 is smooth. The upper shank portion **132e** is connected to the anti-rotation portion **133e** of the shank **126** at a frangible break-away connection **149e**. By contrast, the lower shank portion **136** of the fastener **20e** is not smooth and includes plurality of lower retention rings **150**. Each of the retention rings **150** in the plurality of lower retention rings **150** extends radially around at least part of the shank **126**, meaning that the retention rings **150** may or may not extend a full 360 degrees about the shank **126**.

The anti-rotation portion **133e** of the shank **126** includes first and second faces **151a, 151b** that are flat and that oppose one another. The first and second faces **151a, 151b** are inwardly angled towards the longitudinal axis **138** of the fastener **20e** moving from the lower shank portion **136** to the upper shank portion **132e**. In addition, the first and second faces **151a, 151b** have a width **153e** that increases moving from the lower shank portion **136** to the upper shank portion **132e**. The shank diameter **130** at the upper and lower shank portions **132e, 136** of the fastener **20e** may be the same or may be different. In the example illustrated in Figures 26 and 27, the shank diameter **130** is the same at both the upper and lower shank portions **132e, 136** of the fastener **20e.** The width **153e** of the first and second faces **151a, 151b** of the anti-rotation portion **133e** of the shank **126** reaches a maximum at or near the frangible break-away connection **149e**, where the width **153e** of the first and second faces **151a, 151b** is larger than the shank diameter **130** of the upper and lower shank portions **132e, 136**.

When the fastener **20e** is driven into the first and second building components **76, 88**, the first and second faces **151a, 151b** of the anti-rotation portion **133e** of the shank **126** dig into the first and second building components **76, 88** and resist rotation. By applying a twisting force to the head **122** via the tool interface **143**, the upper shank portion **132** and the head **122** of the fastener **20e** can be separated from the anti-rotation portion **133e** and the lower shank portion **136** at the frangible break-away connection **149e**. This feature of the fastener **20e** shown in Figures 26 and 27 can be beneficial in certain applications where planned separation of the first and second building components **76, 88** is desired. One exemplary and non-limiting application where this feature is particularly advantageous is in pallet construction. The frangible break-away connection **149e** is spaced a pre-set distance **155** away from the bottom face **144** of the head **122**. Accordingly, the pre-set distance **155** between the frangible break-away connection **149e** and the bottom face **144** of the head **122** can be selected relative to the thickness **82** of the first building component **76** so that the shank **126** of the fastener **20e** does not protrude from the first and/or second building components **76, 88** after separation. This provides material handling and safety benefits because the shank **126** of the fastener **20e** does not protrude from the first and/or second building components **76, 88**.

Each retention ring **150** in the plurality of lower retention rings **150** on the lower shank portion **136** includes a ramped face **158**, an outer edge **160**, and a barb face **162**. The ramped face **158** has a frusto-conical shape and is angled relative to longitudinal axis **138** such that each retention ring **150** in the plurality of lower retention rings **150** increases in diameter moving towards the anti-rotation portion **133e** of the shank **126** (i.e. moving towards the head **122** of the fastener **20e**). The barb face **162** extends annularly about the shank **126** and may be abruptly curved, undercut, or flat and transverse to the longitudinal axis **138** of the fastener **20e**. The ramped face **158** and the barb face **162** of each retention ring **150** in the plurality of lower retention rings **150** extend (i.e. project) from the lower shank portion **136** and meet (i.e. converge) at the outer edge **160**. The outer edge **160** may be sharp or rounded. The shank diameter **130** at the lower shank portion **136** of the fastener **20e** is measured across the outer edge **160** of one of the retention rings **150** in the plurality of lower retention rings **150**. The plurality of lower retention rings **150** on the lower shank portion **136** act in concert with the head **122** to oppose separation of the first and second building components **76, 88** prior to planned frangible separation of the fastener **20e**.

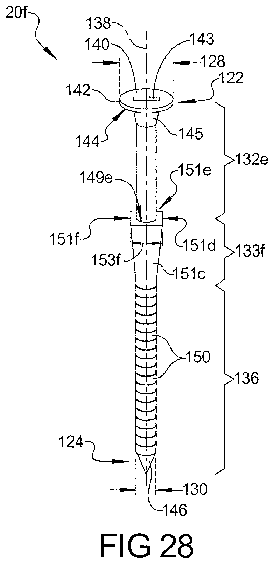

Another fastener **20f** constructed in accordance with the present disclosure is illustrated in Figure 28. The fastener **20f** illustrated in Figure 28 is identical to the fastener **20e** illustrated in Figures 26 and 27 except that the shank **126** of fastener **20f** shown in Figure 28 has an anti-rotation portion **133f** that has four faces **151c-f** that are flat and are outwardly angled away from the longitudinal axis **138** of the fastener **20f** moving from the lower shank portion **136** to the upper shank portion **132e**. As such, the four faces **151c-f** of the anti-rotation portion **133f** of the fastener **20f** shown in Figure 28 have a width **153f** that increases moving from the lower shank portion **136** to the upper shank portion **132**. The width **153f** of the four faces **151c-f** of the anti-rotation portion **133f** of the shank **126** reaches a maximum at or near the frangible break-away connection **149e**, where the width **153f** of the four faces **151c-f** of the anti-rotation portion **133f** is larger than the shank diameter **130** of the upper and lower shank portions **132e, 136.** When the fastener **20f** is driven into the first and second building components **76, 88**, the four faces **151c-f** of the anti-rotation portion **133f** of the shank **126** dig into the first and second building components **76, 88** and resist rotation.

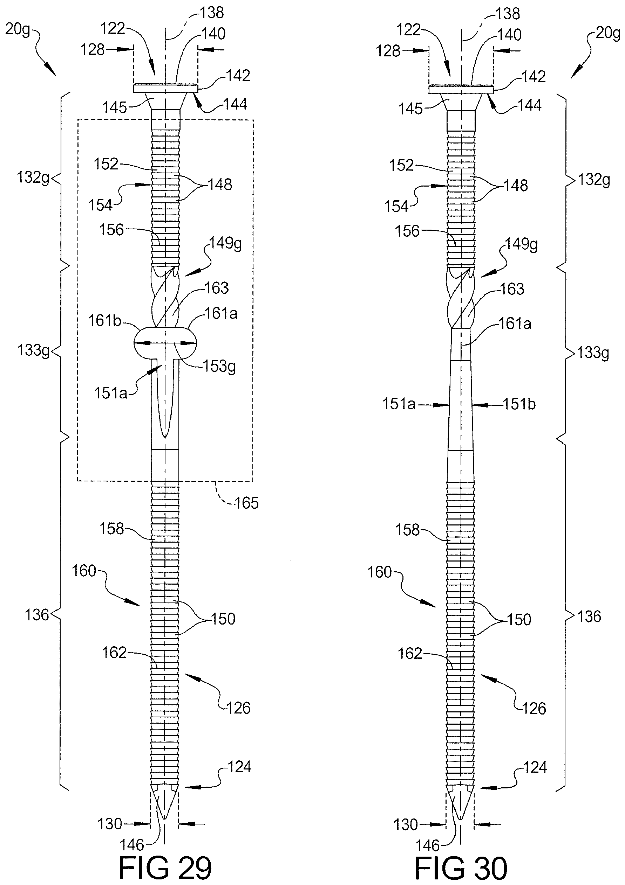

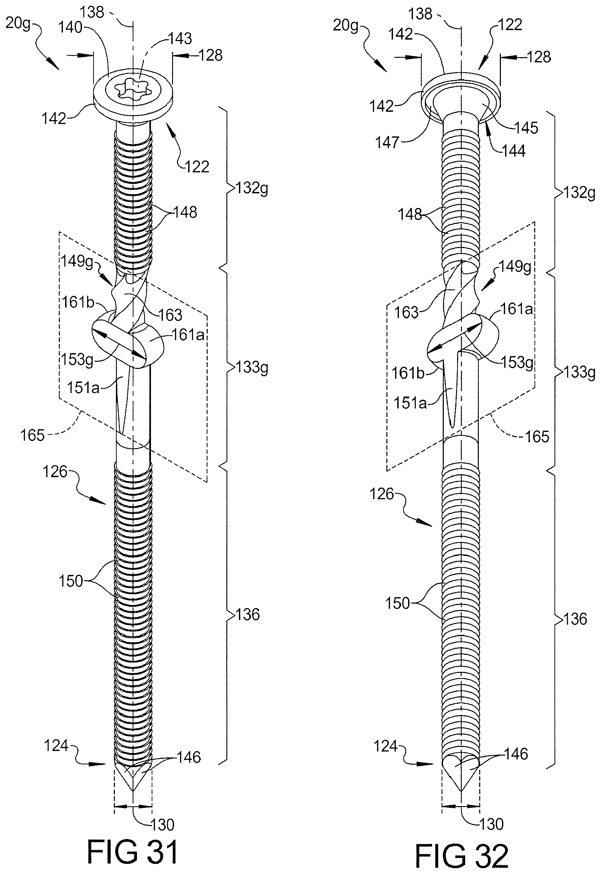

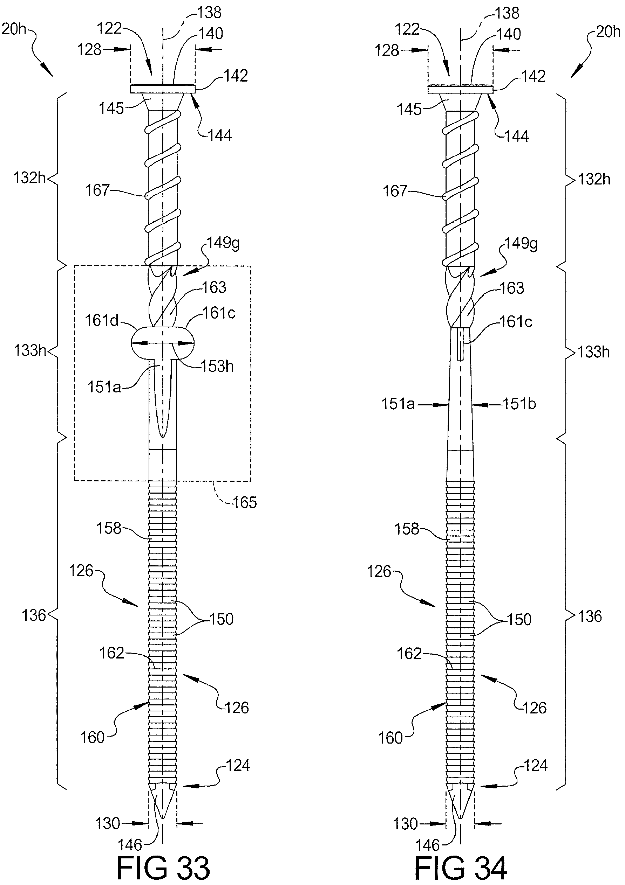

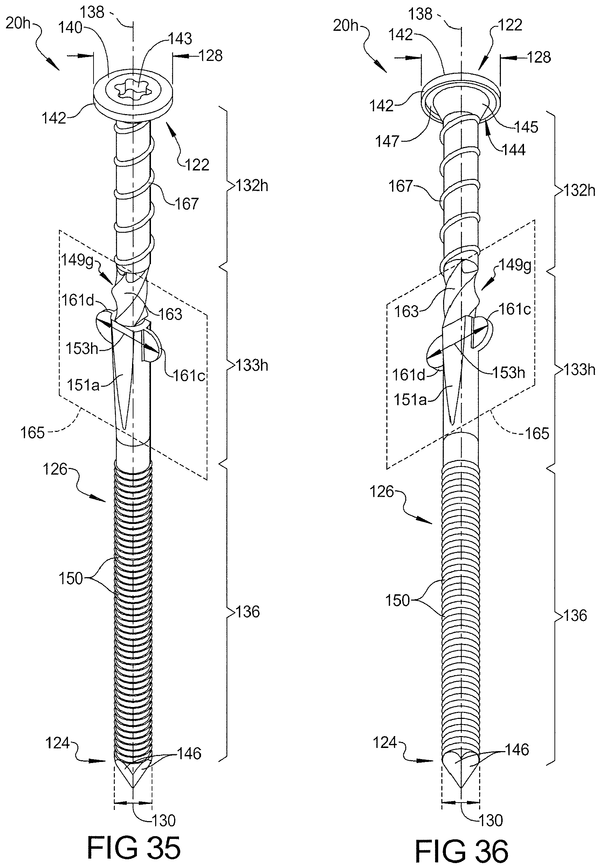

Another fastener **20g** constructed in accordance with the present disclosure is illustrated in Figures 29-32. The fastener **20g** illustrated in Figures 29-32 is identical to the fastener **20e** illustrated in Figures 26 and 27 except that the shank **126** of fastener **20g** shown in Figures 29-32 has an anti-rotation portion **133g** that has two ears **161a, 161b** that protrude outwardly from the anti-rotation portion **133g** of the shank **126**, an upper shank portion **132g** with a plurality of upper retention rings **148**, and a frangible break-away connection **149g** connection that further includes one or more flute-like spirals **163**. As best seen in Figure 31, the two ears **161a, 161b** of anti-rotation portion **133g** are arranged opposite one another in a common plane **165** that bisects the shank **126**. The longitudinal axis **138** of the fastener **20g** is also located in common plane **165**. The two ears **161a, 161b** of anti-rotation portion **133g** illustrated in Figures 29-32 are flush with the first and second faces **151a, 151b**, but could alternatively be inset relative to the first and second faces **151a, 151b** (as shown in Figures 33-36). The two ears **161a, 161b** of anti-rotation portion **133g** give the anti-rotation portion **133g** of the fastener **20g** a width **153g** that reaches a maximum at or near the frangible break-away connection **149g**, where the width **153g** of the two ears **161a, 161b** of the anti-rotation portion **133g** is larger than the shank diameter **130** of the upper and lower shank portions **132g, 136.** When the fastener **20g** is driven into the first and second building components **76, 88**, the two ears **161a, 161b** of the anti-rotation portion **133g** of the shank **126** dig into the first and second building components **76, 88** and resist rotation.

The flute-like spirals **163** of the frangible break-away connection **149g** facilitate the separation of the head **122** and the upper shank portion **132g** from the anti-rotation portion **133g** and the lower shank portion **136**. Each retention ring **148** in the plurality of upper retention rings **148** on the upper shank portion **132g** increase in diameter moving toward the head **122** of the fastener **20g.** In other words, each retention ring **148** in the plurality of upper retention rings **148** increase in diameter moving away from the anti-rotation portion **133g** of the shank **126**. Each of the retention rings **148** in the plurality of upper retention rings **148** extends radially around at least part of the shank **126**, meaning that the retention rings **148** may or may not extend a full 360 degrees about the shank **126**.

Each retention ring **148** in the plurality of upper retention rings **148** on the upper shank portion **132g** includes a ramped face **152**, an outer edge **154**, and a barb face **156**. The ramped face **152** has a frusto-conical shape and is angled relative to longitudinal axis **138** such that each retention ring **148** in the plurality of upper retention rings **148** increases in diameter moving away from the anti-rotation portion **133g** (i.e. moving towards the head **122** of the fastener **20g**). The barb face **156** extends annularly about the shank **126** and may be abruptly curved, undercut, or flat and transverse to the longitudinal axis **138** of the fastener **20g**. The ramped face **152** and the barb face **156** of each retention ring **148** in the plurality of upper retention rings **148** extend (i.e. project) from the upper shank portion **132g** and meet (i.e. converge) at the outer edge **154**. The outer edge **154** may be sharp or rounded. The shank diameter **130** at the upper shank portion **132g** of the fastener **20g** is measured across the outer edge **154** of one of the retention rings **148** in the plurality of upper retention rings **148**. Together, the retention rings **148** in the plurality of upper retention rings **148** on the upper shank portion **132g** of the fastener **20g** and the retention rings **150** in the plurality of lower retention rings **150** on the lower shank portion **136** of the fastener **20g** resist separation of the first and second building components **76, 88**. This improves the holding force and pull-through performance of the fastener **20g**.

Another fastener **20h** constructed in accordance with the present disclosure is illustrated in Figures 33-36. The fastener **20h** illustrated in Figures 33-36 is identical to the fastener **20g** illustrated in Figures 29-32 except that the shank **126** of fastener **20h** shown in Figures 33-36 has an anti-rotation portion **133h** with two ears **161c, 161d** that are inset with respect to the first and second faces **151a, 151b** and an upper shank portion **132h** that has at least one helical thread **167**. The helical thread **167** of the upper shank portion **132h** of the fastener **20h** shown in Figures 33-36 causes the head **122** and the upper shank portion **132h** to back out of the first building component **76** by continued rotation of the head **122** via the tool interface **143** after the frangible break-away connection **149g** separates (i.e. breaks). The two ears **161c, 161d** of anti-rotation portion **133h** give the anti-rotation portion **133h** of the fastener **20h** a width **153h** that reaches a maximum at or near the frangible break-away connection **149g**, where the width **153h** of the two ears **161c, 161d** of the anti-rotation portion **133h** is larger than the shank diameter **130** of the upper and lower shank portions **132h, 136.** When the fastener **20h** is driven into the first and second building components **76, 88**, the two ears **161c, 161d** of the anti-rotation portion **133h** of the shank **126** dig into the first and second building components **76, 88** and resist rotation.

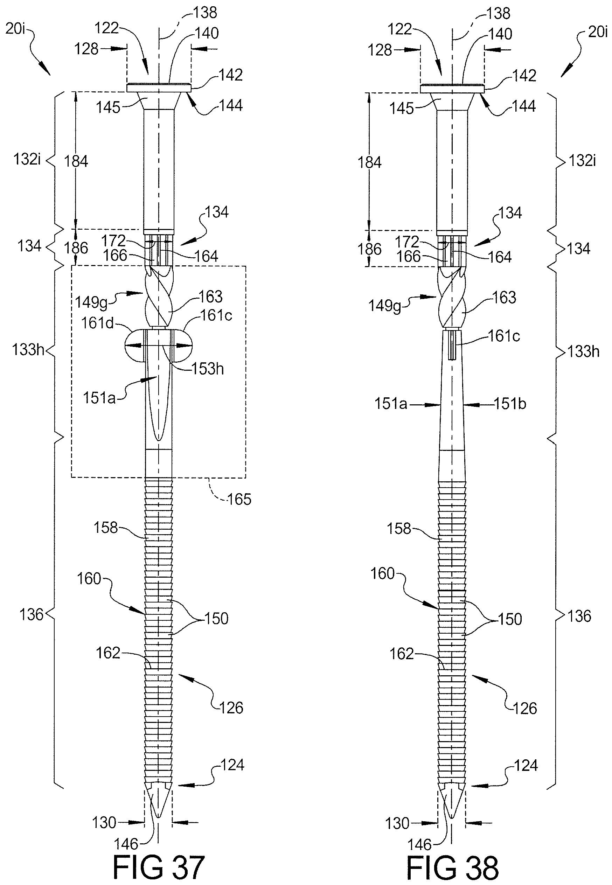

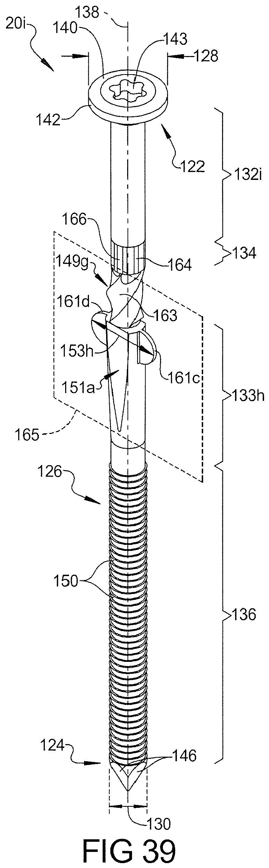

Another fastener **20i** constructed in accordance with the present disclosure is illustrated in Figures 37-39. The fastener **20i** illustrated in Figures 37-39 is identical to the fastener **20g** illustrated in Figures 29-32 except that the shank **126** of fastener **20i** shown in Figures 37-39 has an anti-rotation portion **133i** with two ears **161c, 161d** that are inset with respect to the first and second faces **151a, 151b** (like those found on fastener **20h** shown in Figures 33-36) and a transition zone **134** (like that found on fastener **20a** shown in Figures 6-13) that is disposed longitudinally between an upper shank portion **132i** and the frangible break-away connection **149g.** In addition, the upper shank portion **132i** of fastener **20i** has a smooth, cylindrical shape and lacks the plurality of upper retention rings **148** that are on the upper shank portion **132g** of fastener **20g**.

The transition zone **134** of the fastener **20i** includes multiple longitudinal grooves **164** that define multiple longitudinal ribs **166**. The multiple longitudinal grooves **164** run parallel to the longitudinal axis **138** of the fastener **20i** and extend radially into the shank **126** in the transition zone **134**. The multiple longitudinal ribs **166** also run parallel to the longitudinal axis **138** of the fastener **20i** and are disposed between the multiple longitudinal grooves **164**. The multiple longitudinal grooves **164** and thus the multiple longitudinal ribs **166** are circumferentially spaced about the transition zone **134** of the shank **126** in a sequentially indexed arrangement. Advantageously, the multiple longitudinal ribs **166** increase the lateral shear strength of the transition zone **134** of the shank **26**.

The transition zone **134** of the fastener **20i** has a transition zone diameter **172**. In accordance with the arrangement illustrated in Figures 37-39, the multiple longitudinal ribs **166** do not extend radially beyond the retention rings **150** in the plurality of lower retention rings **150**. In other words, the multiple longitudinal ribs **166** are radially inset relative to the outer edges **160** of the retention rings **150** in the plurality of lower retention rings **150**. Accordingly, the transition zone diameter **172** is less than or equal to the shank diameter **130** of the upper and lower shank portions **132g, 136** of the shank **126**.

The transition zone **134** on the shank **126** of the fastener **20i** is spaced from the head **122** by a pre-determined distance **184** that is associated with the thickness **82** of the first building component **76**. The pre-determined distance **184** is selected to align the transition zone **134** of the fastener **20i** with the lower surface **80** of the first building component **76** when the head **122** of the fastener **20i** is aligned with the upper surface **78** of the first building component **76**. The transition zone **134** of the fastener **20i** also has a pre-determined length **186**. In the illustrated example, the pre-determined length **186** of the transition zone **134** may equal one to two times the shank diameter **130**, but other configurations are possible. The pre-determined length **186** is also selected to align the transition zone **134** of the fastener **20i** with the lower surface **80** of the first building component **76** when the head **22** of the fastener **20i** is aligned with the upper surface **78** of the first building component **76**. As such, the fastener **20i** may be provided in various configurations that are specially adapted for use with first building components **76** of different thicknesses **82**. Because the frangible break-away connection **149g** is below the transition zone **134**, the shank **126** will break off inside the second building component **88**. The location of the transition zone **134** along the shank **126** (i.e. the length of pre-determined distance **184** and the pre-determined length **186**) may be used to visually confirm whether the fastener **20i** being used is appropriate for any given thickness **82** of the first building component **76**. This task may be accomplished by performing the same method steps described above.

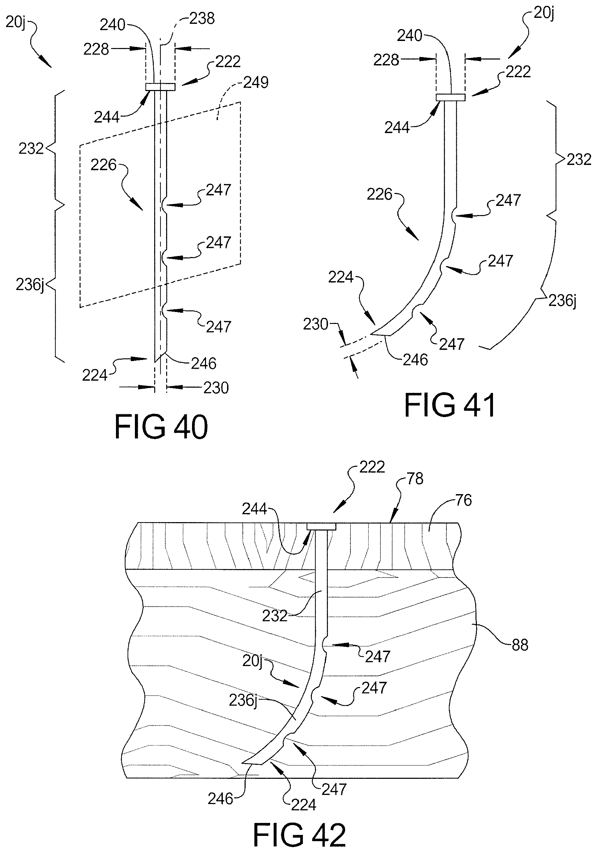

Another fastener **20j** constructed in accordance with the present disclosure is illustrated in Figures 40-42. The fastener **20j** extends longitudinally between a head **222** and a tip **224**. The fastener **20j** also includes a shank **226** disposed between the head **222** and the tip **224**. The head **222** of the fastener **20j** has a head diameter **228** and the shank **226** of the fastener **20j** has a shank diameter **230** that is smaller than the head diameter **228**. The shank **226** of the fastener **20j** includes an upper shank portion **232** and a lower shank portion **236j** that are generally cylindrical in shape. The upper shank portion **232** is disposed adjacent to the head **222** of the fastener **20j** and the lower shank portion **236j** is disposed adjacent to the tip **224** of the fastener **20j**. Accordingly, the upper shank portion **232** extends longitudinally from the head **222** to the lower shank portion **236j** and the lower shank portion **236j** extends longitudinally from the upper shank portion **232** to the tip **224**. As shown in Figure 40, the head **222**, the tip **224**, the upper shank portion **232** and the lower shank portion **236j** are all aligned with one another and are arranged co-axially and sequentially along a longitudinal axis **238** of the fastener **20j.**

It should be appreciated that the head **222** and the tip **224** of the fastener **20j** may be provided in a variety of different configurations without departing from the scope of the present disclosure. The head **222** of the fastener **20j** illustrated in Figures 40-42 includes an upper face **240** and a bottom face **244** that are flat. Notwithstanding this exemplary arrangement, other configurations for the head **222** are possible. The tip **224** of the fastener **20j** illustrated in Figures 40-42 preferably includes a single face **246** that is angled relative to the longitudinal axis **138**. As will be explained below, the lower shank portion **236j** of the fastener **20j** illustrated in Figures 40-42 is designed to bend, thereby clinching the first and second building components **76**, **88** together. The single face **246** of the tip **224** in the illustrated example facilitates the bending of the lower shank portion **236j** of the fastener **20j** by placing a lateral force on the tip **224**.

The upper shank portion **232** of the fastener **20j** illustrated in Figures 40-42 is smooth. The lower shank portion **236j** of the fastener **20j** is also smooth except for one or more relief cuts **247** disposed longitudinally along one side of the lower shank portion **236j.** The shank **226** of the fastener **20j** has a centerline plane **249** that bisects the shank **226**. The longitudinal axis **238** of the fastener **20j** is located in the centerline plane **249**. The relief cuts **247** are radially aligned with one another and are all positioned to one side of the centerline plane **249** of the fastener **20j**. The relief cuts **247** may have a semi-cylindrical shape and facilitate the bending of the lower shank portion **236j** of the fastener **20j**. Figure 42 shows the fastener **20j** after it has been driven into the first and second building components **76, 88** to a position where the bottom face **244** of the head **222** has impacted the upper surface **78** of the first building component **76**. The upper shank portion **232** extends entirely through the first building component **76** such that the lower shank portion **236j** is embedded entirely within the second building component **88.** The combination of the single face **246** of the tip **224** and the relief cuts **247** causes the lower shank portion **236j** to bend and clinch the first and second building components **76, 88** together. As result, the fastener **20j** holds the first and second building components **76, 88** together securely and resists separation of the first and second building components **76, 88**. Accordingly, the fastener **20j** illustrated in Figures 40-42 may be characterized as a clinch nail. The radius of the bend in the lower shank portion **236j** can be controlled using the angle of the single face **246** of the tip **224** relative to the longitudinal axis **238** of the fastener **20j** and the geometry, location, and number of the relief cuts **247** in the lower shank portion **236j**.

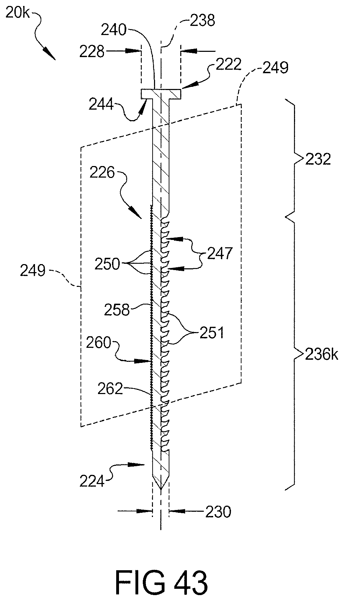

Another fastener **20k** constructed in accordance with the present disclosure is illustrated in Figure 43. The fastener **20k** illustrated in Figure 43 is identical to the fastener **20j** illustrated in Figures 40-42 except that the shank **226** of fastener **20k** shown in Figure 43 has a lower shank portion **236k** that includes a plurality of lower retention rings **250** and a plurality of tapered faces **251** disposed between the relief cuts **247**. Each of the retention rings **250** in the plurality of lower retention rings **250** extends radially around at least part of the shank **226**, meaning that the retention rings **250** may or may not extend a full 360 degrees about the shank **226**. Each retention ring **250** in the plurality of lower retention rings **250** on the lower shank portion **236** includes a ramped face **258**, an outer edge **260**, and a barb face **262**. The ramped face **258** has a frusto-conical shape and is angled relative to longitudinal axis **238** such that each retention ring **250** in the plurality of lower retention rings **250** increases in diameter moving towards the head **222** of the fastener **20k**. The barb face **262** extends annularly about the shank **226** and may be abruptly curved, undercut, or flat and transverse to the longitudinal axis **238** of the fastener **20k**. The ramped face **258** and the barb face **262** of each retention ring **250** in the plurality of lower retention rings **250** extend (i.e. project) from the lower shank portion **236** and meet (i.e. converge) at the outer edge **260**. The outer edge **260** may be sharp or rounded. The shank diameter **230** at the lower shank portion **236** of the fastener **20k** is measured across the outer edge **260** of one of the retention rings **250** in the plurality of lower retention rings **250**. The plurality of lower retention rings **250** on the lower shank portion **236** act in concert with the head **222** to oppose separation of the first and second building components **76, 88.**

Like the plurality of lower retention rings **250**, the plurality of tapered faces **251** disposed between the relief cuts **247** are angled towards the tip **224** of the fastener **20k**. The plurality of tapered faces **251** are radially aligned with the relief cuts **247** and therefore are positioned along one side of the centerline plane **249**. Due to their angle, the plurality of tapered faces **251** further facilitate the bending of the lower shank portion **236** of the fastener **20k** because a lateral force will act on each of the plurality of tapered faces **251** as the fastener **20k** is being driven into the first and second building components **76, 88**.

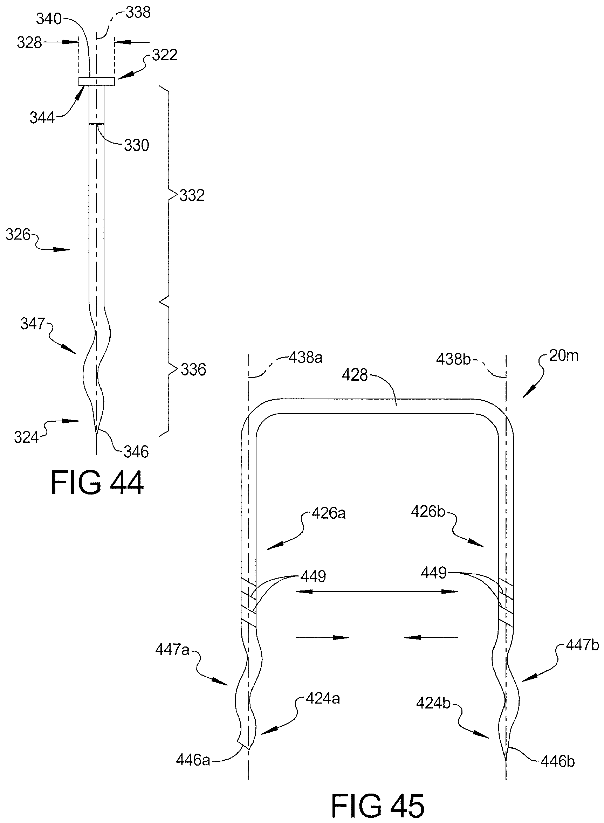

Another fastener **20l** constructed in accordance with the present disclosure is illustrated in Figure 44. The fastener **20l** extends longitudinally between a head **322** and a tip **324**. The fastener **20l** also includes a shank **326** disposed between the head **322** and the tip **324**. The head **322** of the fastener **20l** has a head diameter **328** and the shank **326** of the fastener **20l** has a shank diameter **330** that is smaller than the head diameter **328**. The shank **326** of the fastener **20l** includes an upper shank portion **332** and a lower shank portion **336** that are generally cylindrical in shape. The upper shank portion **332** is disposed adjacent to the head **322** of the fastener **20l** and the lower shank portion **336** is disposed adjacent to the tip **324** of the fastener **20l**. Accordingly, the upper shank portion **332** extends longitudinally from the head **322** to the lower shank portion **336** and the lower shank portion **336** extends longitudinally from the upper shank portion **332** to the tip **324**.

It should be appreciated that the head **322** and the tip **324** of the fastener **20l** may be provided in a variety of different configurations without departing from the scope of the present disclosure. The head **322** of the fastener **20l** illustrated in Figure 44 includes an upper face **340** and a bottom face **344** that are flat. Notwithstanding this exemplary arrangement, other configurations for the head **322** are possible. The tip **324** of the fastener **20j** illustrated in Figures 40-42 preferably includes a single face **346** that is turned at an angle relative to the longitudinal axis **338**. The lower shank portion **336** of the fastener **20l** includes a helical bend **347** that is designed to rotate the fastener **20l** as the fastener **20l** is driven into the first and second building components **76, 88**. This rotation of the fastener **20l** clinches the first and second building components **76, 88** together. Both the upper shank portion **332** and the lower shank portion **336** of the fastener **20l** are smooth.

Figure 45 illustrates a variation of the fastener **20l** illustrated in Figure 44. In Figure 45, a fastener **20m** is illustrated that includes a pair of shanks **426a, 426b** that are transverse to a bridge portion **428**. The pair of shanks **426a, 426b** are parallel to one another and extend along a pair of longitudinal axes **438a, 438b.** Each one of the pair of shanks **426a, 426b** extends from the bridge portion **428** to tip **424a** and **424b,** respectively. Each tip **424a, 424b** has a single face **446a, 446b** that is turned at an angle relative to each longitudinal axis **438a, 438b**, respectively. Optionally, shank **426a** may be longer than shank **426b**. Each one of the pair of shanks **426a, 426b** includes a helical bend **447a, 447b** (like that of fastener **20l** shown in Figure 44) that is disposed near the tip **424a** and **424b** of each shank **426a, 426b**. The helical bends **447a, 447b** designed to rotate as the fastener **20k** is driven into the first and second building components **76, 88**. The rotation of the shanks **426a, 426b** caused by the helical bends **447a, 447b** clinches the first and second building components **76, 88** together. Accordingly, the fastener **20m** shown in Figure 45 may be characterized as a clinch staple. Each shank **426a, 426b** may optionally be provided with one or more relief cuts **449** that allow the shanks **426a, 426b** to rotate without deforming the bridge portion **428**.

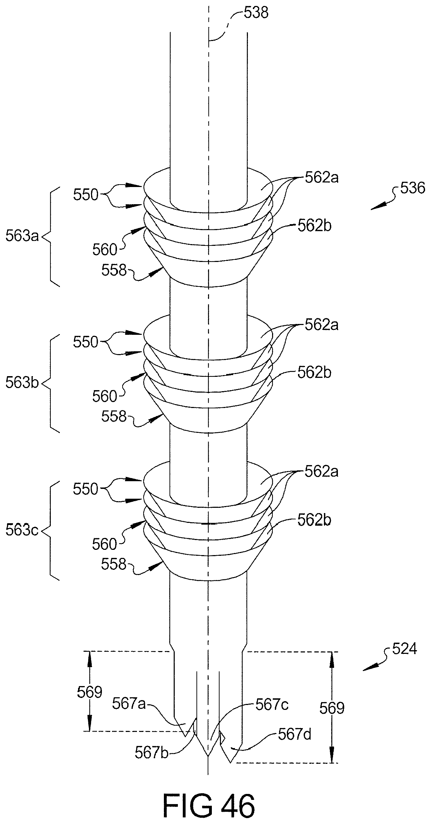

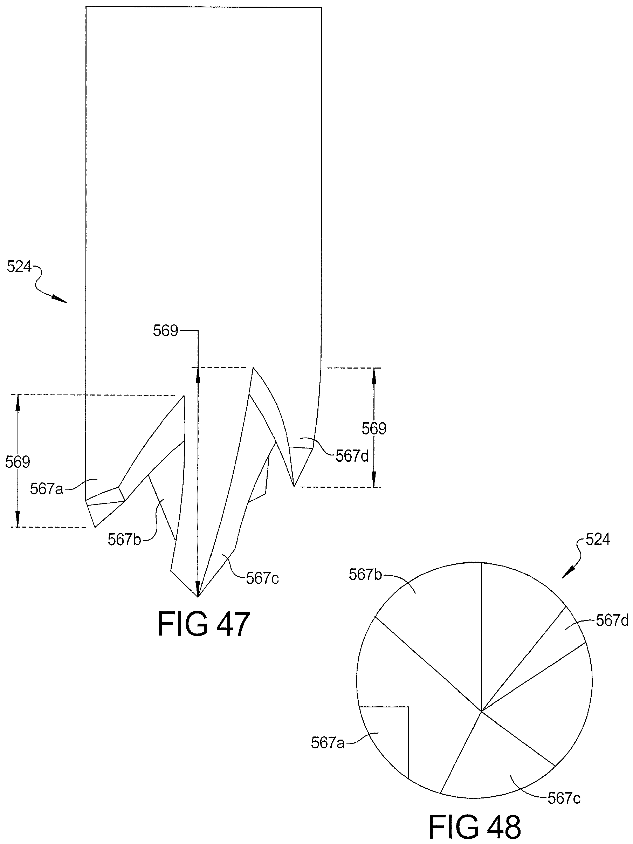

Figures 46-48 illustrate a different tip **524** and lower shank portion **536** that may be applied to any of the fasteners **20a-20i** previously discussed. As shown in Figure 46, the lower shank portion **536** includes plurality of lower retention rings **550**. Each of the retention rings **550** in the plurality of lower retention rings **550** extends radially around at least part of the shank **526**, meaning that the retention rings **550** may or may not extend a full 360 degrees about the shank **526**. Each retention ring **550** in the plurality of lower retention rings **550** on the lower shank portion **536** includes a ramped face **558**, an outer edge **560**, and a barb face **562a** or **562b**. The ramped face **558** is gets progressively larger in diameter moving away from the tip **524**. The retention rings **550** in the plurality of lower retention rings **550** are grouped together in three groups **563a-c** that are separated by longitudinal gaps **565a, 565b**. The barb face **562a** of each retention ring **550** in the plurality of lower retention rings **550** is undercut except for the retention ring **550** of each group **563a-c** that is closest to the tip **524**, which has a barb face **562b** that is flat and transverse to the longitudinal axis **538**. As shown in Figures 46-48, the tip **524** includes four beveled blades **567a-d** that are radially spaced about the tip **524**. The four beveled blades **567a-d** extend longitudinally from the tip **524** and each has a different longitudinal length **569** than the other beveled blades.

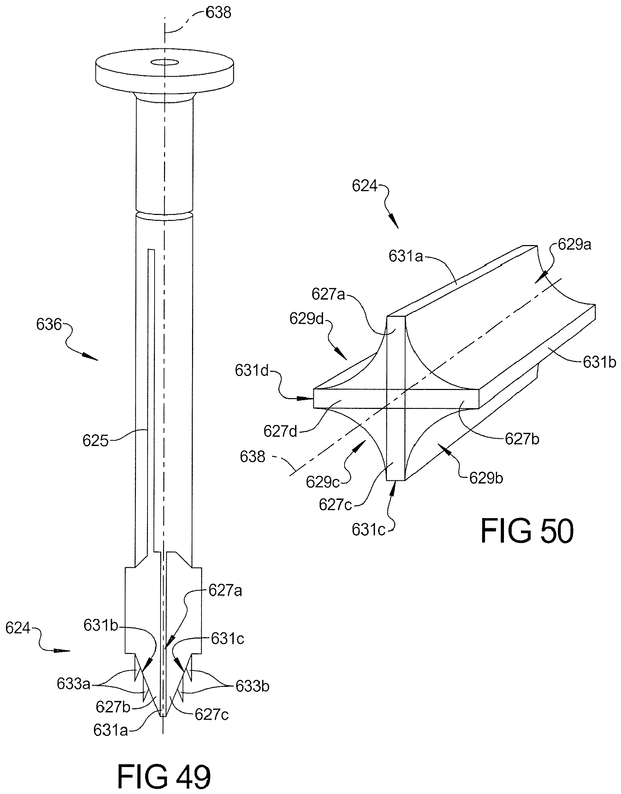

Figures 49 and 50 illustrate yet another tip **624** and lower shank portion **636** that may be applied to any of the fasteners **20a-20i** previously discussed. The lower shank portion **636** may include at least one ridge **625** that projects radially outwardly from the lower shank portion **636** and that extends longitudinally along at least part of the lower shank portion **636** to the tip **624**. As best seen in Figure 50, the tip **624** has four blades **627a-d** that are arranged to give the tip **624** a cross-like cross-section. The four blades **627a-d** transition smoothly from one to the next, providing four curved channels **629a-d** disposed between the four blades **627a-d.** Each of the four blades **627a-d** includes a leading edge **631a-d** that tapers inwardly towards the longitudinal axis **638**, giving the tip **624** a pointed shape. The leading edge **631a-d** of each of the four blades **627a-d** includes one or more projections **633a, 633b** that bite into the first and/or second building components **76, 88**. According to this construction, the tip **624** resists rotation relative to the first and second building components **76, 88**.

Obviously, many modifications and variations of the present invention are possible in light of the above teachings and may be practiced otherwise than as specifically described while within the scope of the appended claims. Although not shown, it should be appreciated that any one of the transition portions **34a-d** disclosed herein may be applied to any one of the fasteners **20e-20h** and **20j-20m** shown in Figures 26-36 and 40-50. Furthermore, any one of numerous surface features such as, but not limited to, various types of ring shanks, splines, grooves, knurl patterns, smooth surfaces, tapered surfaces, etching patterns, stamped patterns and shapes, and/or combinations thereof can be applied above and/or below transition portions **34a-d, 134** on any one of the fasteners **20a-20i** disclosed herein so that application specific parameters can be accomplished. These antecedent recitations should be interpreted to cover any combination in which the inventive novelty exercises its utility. The use of the word "the" in the apparatus claims refers to an antecedent that is a positive recitation meant to be included in the coverage of the claims whereas the word "the" precedes a word not meant to be included in the coverage of the claims.

## Claims

1. A fastener for securing a first building component to a second building component, said fastener comprising:
a head having a head diameter;
a shank connected to said head, said shank having a shank diameter that is less than said head diameter;
said shank extending along a longitudinal axis to a tip;
said shank including an upper shank portion adjacent said head, a lower shank portion adjacent said tip, and a transition zone positioned longitudinally between said upper shank portion and said lower shank portion; and
said transition zone being longitudinally spaced from said head by a pre-determined distance that is associated with a thickness of the first building component such that said transition zone is aligned with a joint between the first and second building components.

2. The fastener as claimed in Claim 1, wherein said transition zone includes multiple longitudinal ribs that are circumferentially spaced about said transition zone.

3. The fastener as claimed in Claim 2, wherein said multiple longitudinal ribs of are radially inset relative to said upper shank portion and said lower shank portion giving said transition zone a transition zone diameter that is less than said shank diameter.

4. The fastener as claimed in Claim 2, wherein said multiple longitudinal ribs extend radially beyond said upper shank portion and said lower shank portion giving said transition zone a transition zone diameter that is greater than said shank diameter.

5. The fastener as claimed in Claim 2, wherein said transition zone includes at least one annular groove.

6. The fastener as claimed in Claim 1, wherein said transition zone has a bulbous shape and a transition zone diameter that is greater than said shank diameter across at least part of said transition zone.

7. The fastener as claimed in any preceding Claim, wherein said lower shank portion includes a plurality of lower retention rings that increase in diameter moving toward said transition zone.

8. The fastener as claimed in Claim 7, wherein said upper shank portion includes a plurality of upper retention rings that increase in diameter moving toward said head.

9. The fastener as claimed in Claim 7, wherein said upper shank portion is smooth.

10. The fastener as claimed in any preceding Claim, wherein said shank includes an anti-rotation portion positioned longitudinally between said lower shank portion and said transition zone.

11. The fastener as claimed in Claim 10, wherein said shank includes a frangible break-away connection between said anti-rotation portion and said transition zone.

12. A method of selecting a fastener and building component comprising the steps of:
placing the fastener adjacent and transverse to the building component;
aligning a head of the fastener with an upper surface of the building component; and
determining whether the fastener is appropriate for use with the building component by visually identifying whether a transition zone provided on a shank of the fastener is aligned with a lower surface of the building component,
wherein the fastener is determined to be appropriate for use with the building component if the transition zone of the fastener is aligned with the lower surface of the building component,
wherein the fastener is determined to be inappropriate for use with the building component if the transition zone of the fastener is above or below the lower surface of the building component.
